(19) Europäisches Patentamt
European Patent Office
Office européen des brevets

(11) EP 2 935 492 B1

# (12) FASCICULE DE BREVET EUROPEEN

(45) Date de publication et mention de la délivrance du brevet:
**26.10.2016 Bulletin 2016/43**

(21) Numéro de dépôt: **13821855.7**

(22) Date de dépôt: **19.12.2013**

(51) Int Cl.:
***C09D 183/04*** (2006.01) ***C08L 83/04*** (2006.01)
***C08G 77/14*** (2006.01) ***C08G 77/08*** (2006.01)
***B01J 31/22*** (2006.01) ***B01J 23/06*** (2006.01)
***B01J 23/26*** (2006.01) ***C09D 5/16*** (2006.01)

(86) Numéro de dépôt international:
**PCT/FR2013/000354**

(87) Numéro de publication internationale:
**WO 2014/096572 (26.06.2014 Gazette 2014/26)**

## (54) ARTICLE PRÉSENTANT DES PROPRIÉTÉS ANTISALISSURES ET DESTINÉ À ÊTRE UTILISÉ DANS DES APPLICATIONS AQUATIQUES EN PARTICULIER MARINES

ARTIKEL MIT FÄULNISVERHINDERNDEN EIGENSCHAFTEN, BESTIMMT ZUR VERWENDUNG IN WASSER, INSBESONDERE IN MEERWASSER

ARTICLE WITH ANTIFOULING PROPERTIES, INTENDED FOR AQUATIC USES AND, IN PARTICULAR, FOR MARINE USES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2012 FR 1203542**

(43) Date de publication de la demande:
**28.10.2015 Bulletin 2015/44**

(73) Titulaire: **Bluestar Silicones France SAS**
**69003 Lyon (FR)**

(72) Inventeurs:
- **MALIVERNEY, Christian**
**69690 Saint Julien sur Bibost (FR)**
- **BLANC, Delphine**
**69007 Lyon (FR)**
- **PLATEL, Delphine**
**01800 Saint Maurice de Gourdans (FR)**

(74) Mandataire: **Mekki, Boualem**
**Bluestar Silicones France**
**Dépt. Brevets - Bât. 77**
**55, avenue des Frères Perret**
**69190 Saint-Fons (FR)**

(56) Documents cités:
**WO-A1-2009/133085** **US-A1- 2008 207 938**
**US-A1- 2010 324 213** **US-A1- 2011 046 304**
**US-A1- 2011 257 286** **US-B1- 6 245 952**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 935 492 B1

## Description

La présente invention concerne un article présentant des propriétés antisalissures et destiné à être utilisé dans des applications aquatiques en particulier marines ainsi qu'un procédé pour retarder la croissance des organismes aquatiques sur les structures submersibles ou semi-submersibles.

L'invention se rapporte au domaine des peintures marines anti-salissures (« antifouling »). Les peintures marines antisalissures sont des revêtements de finition destinés à empêcher la fixation d'animaux ou de végétaux sur les carènes des navires. Elles sont employées pour des raisons de sécurité, de maintien de la manoeuvrabilité des navires, de diminution de la consommation de combustible, de lutte contre la corrosion et d'alourdissement des structures.

Le problème des « biosalissures » constitue un problème majeur résultant de l'immersion de matériaux dans les milieux marins. La prévention de ce phénomène représente un coût considérable en maintenance.

En effet, la formation des « biosalissures » ou «salissures» se produit lors de l'immersion dans l'eau de mer où une couche de molécules organiques et inorganiques est adsorbée à la surface du matériau extrêmement rapidement. Cette couche de matière adsorbée ou « biofilm » sert de médiateur pour l'adhésion des bactéries présentes en suspension dans le milieu marin.

Cette colonisation de la surface par les bactéries marines est rapide et un état stationnaire est atteint au bout d'une période de quelques heures à quelques jours. Enfin, d'autres organismes marins viennent coloniser la surface, les bactéries adhérentes recrutant ces autres organismes. L'ensemble de ces organismes vivants liés à la surface constitue les « biosalissures » ou « fouling », anglicisme qui désigne les salissures.

L'adhésion de salissures marines concerne toute structure immergée en mer : navires, pipelines, tours et circuits de refroidissement, structures portuaires, capteurs marins, systèmes d'aquaculture... Les dommages engendrés sont nombreux et divers. En effet, sur ces structures s'incrustent, par exemple, des organismes qui ont un effet négatif sur les performances des structures.

En particulier, pour les coques de navires, l'incrustation de divers organismes marins augmente les frottements entre les coques de navires et l'eau de mer, ce qui diminue la vitesse et peut entraîner une plus grande consommation de combustible. Ainsi le fond d'un navire qui n'est pas protégé par un système antisalissure peut, après moins de six mois passés en mer, être recouvert de 150 kg de salissure par mètre carré.

C'est pour éviter cette perte économique, et aussi pour mieux inhiber les phénomènes de corrosion, que l'on applique sur les parties immergées des structures exposées à l'eau des peintures dites antisalissures ou « antifouling » qui ont pour but de prévenir ou de réduire notablement l'encrassement par les incrustations d'organismes marins. Le principe des peintures antisalissures repose sur la libération contrôlée de la substance active à l'interface entre la surface et l'eau de mer. L'efficacité de la peinture est maintenue tant que la concentration en substance active relarguée en surface est efficace et régulière. La plupart des peintures antisalissures contiennent donc un produit biocide qui est le plus souvent un composé organométallique (à base d'étain, de cuivre ou de zinc) ou un composé organique (fongicide, algicide, bactéricide) qui prévient l'adhésion des salissures marines par leur activité toxique.

Cependant, le problème associé à l'utilisation de ces peintures est qu'elles relarguent dans le milieu marin des substances nocives pour la faune et la flore maritimes. De plus, les revêtements deviennent de plus en plus rugueux en se dégradant progressivement, ce qui augmente la consommation de carburant et accroît le bruit hydrodynamique émis par la structure immergée.

Cette nouvelle difficulté a été résolue en utilisant des peintures antisalissures autopolissables. En plus de posséder des agents biocides, ces peintures présentent, sous l'action de l'hydrolyse superficielle par l'eau de mer et de celle de l'érosion due au mouvement du navire, une perte régulière et contrôlée d'épaisseur en fonction du temps. La lente érosion du revêtement en contact avec l'eau de mer permettant de raviver constamment la surface en agents biocides.

Les peintures antisalissures autopolissables développées depuis les années 1960 étaient à base de sels d'étain. Il s'agissait de peintures autopolissantes, formulées à partir de copolymères de méthacrylate de tributylétain (TBT) qui possèdent un taux de lixiviation constant. Le TBT greffé sur un liant acrylique est libéré lentement par hydrolyse dans l'eau. Des exemples de ce type de peinture sont décrits dans les documents FR-A-2266733, FR-A-2557585, EP-A-0051930 et GB-A-2118196.

Le tributylétain (TBT), très efficace a donc été le biocide le plus utilisé dans les peintures antisalissures, mais ce produit, ses molécules de dégradation et ses métabolites se sont révélés gravement et durablement polluants. Pour ces raisons, l'organisation maritime internationale a interdit l'utilisation des peintures antisalissures à base d'étain.

Les peintures antisalissures utilisées aujourd'hui sont principalement à base de composés cuivrés et/ou de composés chimiques de synthèse mais également à base de polymères de type silicone.

Pour les peintures à base de cuivre, bien que moins toxiques que les sels d'étain, elles sont pratiquement toujours formulées avec une proportion massive d'oxyde cuivreux (voir par exemple le document EP-A-051930 ou FR-A-2557585), le liant principal étant à base de polymères spéciaux généralement du type acrylique. Cependant, elles ne sont efficaces que contre la faune marine et pour lutter contre la pousse d'algues, il est indispensable d'ajouter des

herbicides qui peuvent faire peser de nouvelles menaces sur l'environnement.

Cette alternative n'apporte donc pas de solution durable pour protéger l'environnement de l'important rejet d'ions lourds, notamment ceux du cuivre consécutif à la mise en oeuvre intensive de peintures sans étain mais riches en cuivre.

Une autre solution pour prévenir l'encrassement des surfaces de structures en contact avec l'eau de mer consiste à recouvrir ces surfaces par au moins un revêtement protecteur, la couche externe du revêtement en contact avec l'eau étant un élastomère silicone. Ces revêtements sont préparés à partir de peintures dites « fouling-release coating ». Le principe de ces nouvelles peintures antisalissures est de créer une surface très lisse, à faible énergie de surface sur laquelle les organismes ont de grandes difficultés à adhérer. Quand de telles surfaces sont stationnaires, des organismes marins peuvent s'y déposer. Cependant, grâce à la souplesse et à la faible tension superficielle de la couche de finition à base de silicone, ces organismes sont tout simplement éliminés par la force du mouvement de l'eau ou l'effet de frottement causé par le mouvement du navire. Cela signifie également que, s'il y a suffisamment de mouvement de l'eau autour de la coque d'un navire, un effet autonettoyant naturel se produit.

Grâce à ces propriétés, même les navires qui sont moins fréquemment en mer ou dans des eaux à moindre mouvement bénéficient d'intervalles de nettoyage plus échelonnés. Cela est dû au fait que les organismes marins ont du mal à adhérer à la surface, ce qui rend aussi le nettoyage plus aisé.

Ces peintures à base de silicones formant un revêtement antisalissures sont donc très novatrices :

- elles sont totalement respectueuses de l'environnement marin : pas de rejet de métaux, et
- elles améliorent la glisse des navires, réduisant ainsi de 1 à 5% leur consommation de fuel et donc leurs émissions de gaz à effet de serre.

Il existe de nombreux brevets, par exemple les brevets FR-A-2 083 029 et US-A-3 702 778, décrivant de tels revêtements dont la couche finale, appelée « top coat », est en élastomère silicone durci à chaud ou à froid.

Par exemple, dans la demande de brevet US n°07/847 401, déposée le 6 Mars 1992, est décrit un système antisalissure à trois constituants, comprenant au moins une couche de primaire époxy, une couche de fixation ou primaire d'adhésion (« tie coat ») et une couche antisalissure (« top coat ») à base d'élastomère silicone. La couche finale de primaire époxy est normalement une couche mince que l'on applique pour obtenir une surface propre et fraîche à laquelle la couche de fixation peut adhérer. La couche de fixation comprend un organopolysiloxane et un constituant durcissant. La couche antisalissure comprend un organopolysiloxane, un silicate d'alkyle et un agent de durcissement ou un catalyseur séparé à base d'étain. La couche ou les couches de primaire époxy sont appliquées directement au support. La couche de fixation est appliquée sur la couche ou les couches de primaire époxy. La couche antisalissure en revêtement de silicone est ensuite appliquée et réticulée sur la couche de fixation, après durcissement partiel de cette dernière.

Une couche antisalissure (« top coat ») à base d'élastomère silicone peut comporter en outre des fluides qui améliorent l'effet "antisalissure" en particulier :

- des huiles méthylphénylpolysiloxanes (US-A-4 025 693),
- un composé liquide hydrocarboné, par exemple une polyoléfine,
- un plastifiant,
- une huile lubrifiante (FR-A-2 375 305),
- des paraffines liquides et des masses cireuses du type pétrolatum (JP-A-83/013 673),
- un polymère thermoplastique tel que du PVC,
- un copolymère chlorure de vinyle/acétate de vinyle (KOKAI JP-A-79/026 826), ou
- des tensio-actifs cationiques, anioniques, non-ioniques, amphotères (JP-A-85/258 271).

Afin de former le revêtement en élastomère silicone, les formulations silicones utilisées font généralement intervenir une huile silicone, généralement un polydiméthylsiloxane réactif à terminaisons hydroxylées, éventuellement pré-fonctionnalisées par un silane de façon à présenter des extrémités alcoxy, un réticulant et un catalyseur de polycondensation, classiquement un sel d'étain ou un titanate d'alkyle, une charge de renfort et d'éventuels autres additifs comme des charges de bourrage, des promoteurs d'adhérence, des colorants, etc.

Ces compositions organopolysiloxaniques vulcanisables dès la température ambiante sont bien connues et sont classées en 2 groupes distincts : les compositions monocomposantes (RTV-1) et les compositions bicomposantes (RTV-2). Le terme "RTV" est l'acronyme pour "Room Temperature Vulcanising".

Lors de la réticulation, l'eau (soit apportée par une humidité atmosphérique dans le cas des RTV-1, soit introduite dans une partie de la composition dans le cas des RTV-2) utilisant des catalyseurs à base de carboxylate d'étain permet la réaction de polycondensation, qui conduit à la formation du réseau élastomèrique.

Généralement, les compositions monocomposants (RTV-1) réticulent quand elles sont exposées à l'humidité de l'air, c'est-à-dire qu'elles ne peuvent réticuler dans un milieu en confiné. Par exemple, les compositions silicones

monocomposant réticulent à froid suivant un mécanisme d'hydrolyse de fonctions réactives du type acétoxysilane, cétiminoxysilane, alcoxysilane..., suivi par des réactions de condensation entre des groupements silanols formés et d'autres fonctions réactives résiduelles. L'hydrolyse est généralement effectuée grâce à la vapeur d'eau qui diffuse dans le matériau à partir de la surface exposée à l'atmosphère. Généralement, la cinétique des réactions de polycondensation est extrêmement lente ; ces réactions sont donc catalysées par un catalyseur approprié. Comme catalyseurs utilisés, on fait appel le plus souvent à des catalyseurs à base d'étain, de titane, d'une amine ou des compositions de ces catalyseurs. Les catalyseurs à base d'étain (cf. notamment FR-A-2 557 582) et de titane (cf. notamment FR-A-2 786 497) sont des catalyseurs ayant une bonne efficacité. Les élastomères silicones monocomposants à extrémités -Si(OR) sont parfois désignés sous l'appellation élastomères alcoxy.

Quant aux compositions bicomposantes, elles sont commercialisées et stockées sous la forme de deux composantes, une première composante contenant les matériaux polymériques de base et la deuxième composante contenant le catalyseur. Les deux composantes sont mélangées lors de l'emploi et le mélange réticule sous la forme d'un élastomère relativement dur. Ces compositions à deux composantes sont bien connues et sont notamment décrites dans l'ouvrage de Walter Noll "Chemistry and Technology of Silicones" 1968, 2ème édition aux pages 395 à 398. Ces compositions comportent le plus souvent les ingrédients suivants :

- un polydiorganosiloxane réactif avec des groupements silanols en bout de chaine (par exemple un $\alpha,\omega$-di(hydroxydiméthylsilyl)(polydiméthylsiloxane), dans la chaine ou en bout de chaine et dans la chaine ,
- un agent de réticulation,
- un catalyseur de condensation, et
- éventuellement de l'eau, souvent présente lorsqu'un dicarboxylate de dialkylétain est utilisé comme catalyseur (activation de ce dernier par la présence d'eau).

Le plus souvent, le catalyseur de condensation est à base d'un composé organique d'étain. En effet, de nombreux catalyseurs à base d'étain ont déjà été proposés comme catalyseur de réticulation de ces RTV-1 ou RTV-2. Des catalyseurs de polycondensation classiques comprennent des composés de dialkylétain, notamment des dicarboxylates de dialkylétain tels que le dilaurate et le diacétate de dibutylétain, les composés de titanate d'alkyle tels que le tétrabutyl ou le tétraisopropyltitanate, les chélates de titane (EP-A-0 885 933, US-5 519 104, US-A-4,515,932, US-A-4,563,498, US-A-4,528,353).

Cependant, les catalyseurs à base d'alkylétain, bien que très efficaces, le plus souvent incolores, liquides et solubles dans les huiles silicones présentent l'inconvénient d'être toxiques (CMR2 toxiques pour la reproduction).

Pour un développement durable, il apparaît donc nécessaire de développer de nouvelles peintures antisalissure ne comprenant pas de catalyseur toxique.

Par exemple, une caractéristique importante d'une composition silicone durcissable est le temps de mise en oeuvre (« pot-life » ou « temps de travail »), c'est-à-dire le temps pendant lequel la composition peut être utilisée après mélange sans durcir. Ce temps doit être suffisamment long, pour permettre son utilisation mais suffisamment court pour obtenir un revêtement dur. Par exemple pour un revêtement de type "tie coat" ou "top coat" un temps de travail entre 2 et 4 heures est généralement requis lorsque la température extérieure est comprise entre 20 et 30°C. Hors, un des moyen d'ajuster ce temps de travail est la nature des composants utilisés comme le catalyseur ou le réticulant

Pour toutes ces raisons, de nouvelles stratégies pour lutter contre l'adhésion des salissures aquatiques et en particulier marines se développent aujourd'hui.

L'invention a pour but de proposer un article possédant des propriétés antisalissures au moyen de revêtements obtenus à partir de peintures antisalissures ne comportant pas de composants prohibés (biocide ou catalyseur) et ne contenant pas d'étain.

La présente invention concerne donc un article présentant des propriétés antisalissures et destiné à être utilisé dans des applications aquatiques en particulier marines, comprenant :

a) un support **(1),**

b) au moins une couche favorisant l'adhérence **(3)** déposée sur ledit support **(1),** et

c) au moins une couche antisalissure **(4)** déposée sur ladite couche favorisant l'adhérence **(3),** ledit article étant caractérisé en ce que ladite couche antisalissure **(4)** est obtenue après dépôt et durcissement au contact de l'humidité de l'air d'une composition **Z** comprenant :

(i) au moins un composé organosilicié **A'** comprenant au moins deux groupements hydrolysables et condensables, identiques ou différent, ou au moins deux fonctions silanol ≡SiOH,

(ii) au moins un agent de réticulation **B'**, et

(iii) une quantité catalytiquement efficace d'au moins un catalyseur de polycondensation **M** qui est un complexe de zinc comprenant dans sa structure un premier type de ligand qui est une $\beta$-dicétonate et un deuxième type

de ligand qui est une amine.

Pour atteindre cet objectif, la Demanderesse a eu le mérite de mettre en évidence, de manière tout à fait surprenante et inattendue, qu'un catalyseur de polycondensation **M** selon l'invention, qui est un complexe de zinc comprenant dans sa structure deux types de ligands une β-dicétonate et amine, permet de préparer des couches ou revêtements antisalissures utiles comme "tie coat" ou "top coat" dans les applications antisalissures. Pourtant, les complexes de β-dicétonate de zinc non aminé bien qu'ayant des similitudes structurales sont bien moins efficaces quant à la vitesse de réticulation et propriétés finales de la couche antisalissure obtenue après durcissement au contact de l'humidité de l'air. Les couches ou revêtements obtenus selon l'invention ont des propriétés d'adhésion remarquables sur les supports ainsi traités tout en conférant une surface traitée très lisse, à faible énergie de surface sur laquelle les organismes ont de grandes difficultés à adhérer.

Les catalyseurs selon l'invention sont mises en oeuvre dans les systèmes silicones à réticuler à des teneurs très faibles, et permettent suivant la teneur d'adapter les temps de travail à l'application tout en garantissant des excellentes duretés des élastomères obtenus. Le catalyseur selon l'invention peut être à l'état solide ou liquide. Il peut être incorporé seul ou dans un solvant approprié. Lorsqu'il est en solvant, une huile silicone peut être additionnée, le solvant est ensuite évaporé de manière à transférer le catalyseur dans un milieu silicone. Le mélange obtenu sert de base catalysante.

Par « β-dicétonate » on entend l'anion énolate d'un composé β-dicarbonylé. Dans le présent mémoire, la nomenclature utilisée pour décrire les ligands «β-dicétonates» dans les structures chimiques des complexes de zinc selon l'invention est faite à partir de la béta-dicétone correspondante qui est la forme non anionique du ligand β-dicétonate avant sa complexation avec l'atome de zinc (préparation via l'action d'une base). Par exemple, dans l'écriture suivante :

- « [Zn(acac)$_2$ (n-propylamine)$_2$], avec le ligand acac= pentanedione-2,4 », Il est entendu que le ligand complexant le zinc est l'anion pentanedionate correspondant :

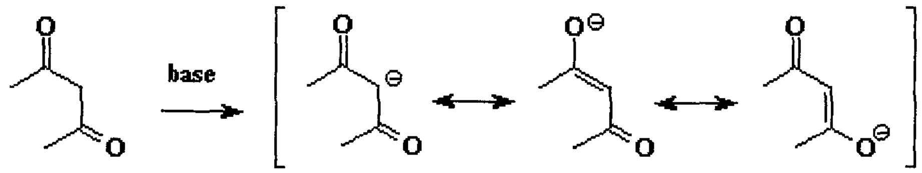


acac = pentanedione-2,4 anion β-dicétonate correspondant

Il est aussi entendu que le terme « complexe » inclue dans sa définition toute forme monomérique, oligomérique ou analogue dudit complexe de zinc selon l'invention.

De manière préférentielle, le catalyseur de polycondensation **M** est un complexe de zinc comprenant dans sa structure au moins deux ligands carboxylate et au moins un ligand amine, et encore plus préférentiellement, le catalyseur de polycondensation **M** est un complexe de zinc comprenant dans sa structure :

- au moins deux ligands β-dicétonate, identiques ou différent, et
- un ou deux ligand(s) amine.

Il est entendu que le terme « complexe » inclue dans sa définition toute forme monomérique, oligomérique ou analogue dudit complexe de zinc selon l'invention.

Il est du mérite des inventeurs d'avoir trouvé, de manière tout à fait surprenante et inattendue, qu'il convient d'utiliser des complexes métalliques du zinc comprenant deux types de ligands spécifiques que sont les ligands β-dicarbonylé et amines pour atteindre des vitesses de réticulation bien plus efficace que les complexes de bis(β-dicétonate) de zinc qui ont pourtant des similitudes structurales.

Il est aussi du mérite des inventeurs d'avoir vaincu le préjugé technique qui voulait que, jusqu'alors certains complexes de métaux, comme le zinc par exemple, ne présentent qu'une médiocre activité dans la réaction de polycondensation d'organopolysiloxanes.La définition des ligands est tirée de l'ouvrage « Chimie Organométallique » de Didier Astruc, publié en 2000 par EDP Sciences, Cf. notamment Chapitre 1, « Les complexes monométalliques », pages 31 et suivantes.

Le catalyseur selon l'invention peut être à l'état solide ou liquide. Il peut être incorporé seul ou dans un solvant approprié. Lorsqu'il est en solvant, une huile silicone ou tout autre solvant compatible comme des coupes pétrolières peut être additionnée, le solvant est ensuite évaporé de manière à transférer le catalyseur dans un milieu silicone. Le

mélange obtenu peut servir alors de « base catalysante ».

Selon un mode de réalisation préféré, le(s) catalyseur(s) de polycondensation **M** est (sont) susceptible(s) d'être obtenu(s) :

a) en faisant réagir pour 1 mole d'au moins un complexe de zinc de formule [Zn (β-dicétonate)$_2$] ou d'un mélange de deux complexes de zinc distincts de formule [Zn (β-dicétonate)$_2$] **$X^1$** mole d'amine ou d'un mélange d'amine, avec **$X^1$** ≤ 2,5 équivalents molaire par rapport au zinc, éventuellement en présence d'un solvant, de manière à obtenir un produit de réaction comprenant :

- x mole d'un complexe de zinc **A** qui est un complexe de formule [(Zn(β-dicétonate)$_2$)$_r$(amine)]$_{z'}$
- y mole d'un complexe de zinc **B** qui est un complexe de formule [(Zn(β-dicétonate)$_2$ )$_r$(amine)$_2$]$_{z'}$,
- avec x≥0, y≥0, le symbole r≥1 et de préférence r=1, 2, 3 ou 4, et le symbole z' est un nombre entier supérieur ou égal à 1, et de préférence z'=1, 2, 3 ou 4,
- éventuellement **$X^3$** mole du complexe [Zn (β-dicétonate)$_2$], et
- éventuellement **$X^4$** mole d'amine résiduelle n'ayant pas réagi, et

b) après élimination de l'amine résiduelle et éventuellement du solvant, on récupère le(s) catalyseur(s) de polycondensation **M** sous la forme d'au moins un complexe de zinc **A,** d'au moins un complexe de zinc **B** ou d'un mélange de complexe de zinc **A** et de complexe de zinc **B,** avec éventuelllement une quantité résiduelle de **$X^3$** mole du complexe [Zn (β-dicétonate)$_2$], et

- et les symboles **$X^1$**, **$X^3$** et **$X^4$** sont des nombres et la somme x+y+ **$X^3$**=1.

L'élimination du solvant et de l'amine résiduelle se fera par toute technique connue (distillation, filtration,...). Le procédé de préparation prend soin d'éliminer toute amine résiduelle ceci afin d'éviter toute exudation de l'amine en surface lorsque l'élastomère est préparé par durcissement de la composition au contact de l'humidité de l'air. L'élimination du solvant ou de l'amine résiduelle se fera par toute technique connue (distillation, filtration,...). Il est connu que des structures [Zn(β-dicétonate)$_2$ (amine)] ou [Zn(β-dicétonate)$_2$(amine)$_2$] peuvent aussi former des dimères, trimère ou tétramère. Par conséquent la définition du catalyseur selon l'invention englobe aussi les formes dimères, trimère ou tétramère dudit catalyseur selon l'invention.

Suivant le type de catalyseur de polycondensation **M** souhaité (complexe de bis(β-dicétonate) de zinc mono ou diaminé, ou un mélange de ces espèces), le nombre de mole d'amine **$X^1$** sera ajusté en conséquence :

- **$X^1$** ≥ 2 équivalents molaire par rapport au zinc, et ≤ 2,5 équivalents molaire par rapport au zinc, pour obtenir majoritairement un complexe de formule [[(Zn (β-dicétonate)$_2$)$_r$ (amine)$_2$]$_{z'}$,
- 1 ≤ **$X^1$** < 2 équivalents molaire par rapport au zinc pour obtenir un mélange de complexes :

  [(Zn(β-dicétonate)$_2$)$_r$(amine)]$_{z'}$ et [(Zn (β-dicétonate)$_2$)$_r$(amine)$_2$]$_{z'}$,

- **$X^1$** < 1 équivalents molaire par rapport au zinc pour obtenir un mélange de complexe [Zn (β-dicétonate) $_2$ (amine)] et de complexe [Zn (β-dicétonate)$_2$] n'ayant pas réagi,

avec : le symbole r≥1 et de préférence r=1, 2, 3 ou 4, et le symbole z' est un nombre entier supérieur ou égal à 1, et de préférence le symbole z'=1, 2, 3 ou 4, et encore plus préférentiellement z'=1 ou 2.

De préférence, le nombre de mole d'amine $X^1$ ajoutée lors de la synthèse du catalyseur selon l'invention sera ≤ 2,5 équivalents molaires par rapport au zinc pour éviter la présence d'une quantité non négligeable d'amine libre dans la composition selon l'invention. Il est connu que les amines organique peuvent migrer à la surface de l'élastomère silicone formant ainsi des souillures dégradant ainsi les propriétés de l'élastomère tout en contaminant l'environnement proche de l'élastomère.

Les complexes de type [Zn (β-dicétonate)$_2$] sont pour la plupart disponibles commercialement ou alors peuvent être préparés selon un mode opératoire décrit dans la demande internationale WO-2009/106718.

Les complexes de type bis(β-dicétonate) de zinc sont pour la plupart disponibles commercialement ou alors peuvent être préparés aisément par exemple selon un mode opératoire décrit dans la demande internationale WO-2009/106718.

De préférence, le nombre de mole d'amine $X^1$ ajoutée lors de la synthèse du catalyseur selon l'invention sera ≤ 2,5 équivalents molaire par rapport au zinc pour éviter la présence d'une quantité non négligeable d'amine libre dans le milieu et qui ne serait pas souhaitable pour la stabilité de la composition selon l'invention.

Selon un mode de réalisation particulier, l'invention concerne un article comprenant :

a) un support **(1),**
b) au moins une couche primaire **(2)** déposée sur ledit support **(1)** comprenant au moins un produit anticorrosif,
c) au moins une couche **(3)** favorisant l'adhérence déposée sur ladite couche primaire **(2),** et
d) au moins une couche antisalissure **(4)** déposée sur ladite couche **(3)** favorisant l'adhérence, ledit article étant caractérisé en ce que ladite couche antisalissure **(4)** est obtenue après dépôt et durcissement au contact de l'humidité de l'air d'une composition **Z** comprenant :

(i) au moins un composé organosilicié **A'** comprenant au moins deux groupements hydrolysables et condensables, identiques ou différent, ou au moins deux fonctions silanol ≡SiOH,
(ii) au moins un agent de réticulation **B'**, et
(iii) une quantité catalytiquement efficace d'au moins un catalyseur de polycondensation **M** qui est un complexe de zinc comprenant dans sa structure un premier type de ligand qui est une β-dicétonate et un deuxième type de ligand qui est une amine

Selon un mode de réalisation préféré, la composition **Z** comprend :

(i) au moins un composé organosilicié **A'** comprenant au moins deux groupements hydrolysables et condensables, identiques ou différent, ou au moins deux fonctions silanol ≡SiOH,
(ii) au moins un agent de réticulation **B',** et
(iii) une quantité catalytiquement efficace d'au moins un catalyseur de polycondensation **M** qui est un complexe de formule (**1'**) suivante :

$$[Zn\ (C^1)_{n'}\ (C^2)_{n''}\ (L^1)_{y'}\ (L^2)_{y''}\ (X)_{x'}]_{z'} \cdot (H_2O)_{x''} \qquad \textbf{(1')}$$

dans laquelle :

- les symboles $C^1$ et $C^2$ sont des ligands, identiques ou différents, choisis dans le groupe des β-dicétonates,
- les symboles n' et n" sont des nombres entiers égaux à 0, 1 ou 2 avec la condition que la somme n'+ n"= 2,
- les symboles $L^1$ et $L^2$ sont des ligands, identiques ou différents, choisis dans le groupe des amines,
- les symboles y' et y" représentent le nombre de ligands amines et sont des nombres entiers égaux à 0, 1 ou 2 avec la condition que la somme y'+ y"= 1 ou 2,
- le symbole X est un ligand différent de $C^1$, $C^2$ , $L^1$ et $L^2$ et de préférence un ligand neutre autre qu'une amine et encore plus préférentiellement X est une molécule $H_2O$
- le symbole x'≥0, et de préférence x' = 0, 1, 2, 3 ou 4,
- le symbole x" ≥0, et de préférence x"= 0, 1, 2, 3 ou 4, et
- le symbole z' est un nombre entier supérieur ou égal à 1, et de préférence z'=1 ou 2.

Le ligand X est de préférence un ligand neutre autre qu'une amine et dont la structure importe peu. L'homme du métier utilisera tout type de précurseur lors de la préparation du catalyseur **M** selon l'invention de manière à ce que ce ligand neutre n'interfère pas avec la réactivité du catalyseur. Un exemple de ligand neutre est par exemple une molécule d'eau.
De préférence, le catalyseur de polycondensation **M** est un complexe de formule **(2')** suivante :

$$[Zn\ (C^1)_{n'}\ (C^2)_{n''}\ (L^1)_{y'}\ (L^2)_{y''}]_{z'} \qquad \textbf{(2')}$$

dans laquelle :

- les symboles $C^1$ et $C^2$ sont des ligands, identiques ou différents, choisis dans le groupe des β-dicétonates,
- les symboles n' et n" représentent le nombre de ligand β-dicétonate et sont des nombres entier égal à 0, 1 ou 2 avec la condition que la somme n'+ n"=2,
- les symboles $L^1$ et $L^2$ sont des ligands, identiques ou différents, choisi dans le groupe des amines,
- les symboles y' et y" représentent le nombre de ligand amine et sont des nombres entiers égaux à 0, 1 ou 2 avec la condition que la somme y'+ y"= 1 ou 2, et
- le symbole z' est un nombre entier supérieur ou égal à 1, et de préférence z'=1 ou 2 et encore plus préférentiellement z'=1.

Selon un autre mode de réalisation préféré, le catalyseur de polycondensation **M** est un complexe de formule **(3')** suivante :

$$[(Zn\ (C^1)_2)_r\ (L^1)_{y'}]_{z'} \qquad \textbf{(3')}$$

dans laquelle :

- le symbole $C^1$ est un ligand choisi dans le groupe des β-dicétonates,
- le symbole $L^1$ set un ligand choisi dans le groupe des amines,
- le symbole y' est un nombre égal à 1 ou 2
- le symbole r≥1 et de préférence r=1, 2, 3 ou 4, et
- le symbole z' est un nombre entier supérieur ou égal à 1, et de préférence le symbole z'=1, 2, 3 ou 4, et encore plus préférentiellement z'=1 ou 2.

Des exemples d'amines utiles comme ligands $L^1$ ou $L^2$ sont par exemple les amidines suivantes: N'-cyclohexyl-N,N-diméthylformamidine,N'-méthyl-N,N-di-n-butylacétamidine, N'-octadécyl-N,N-diméthylformamidine, N'-cyclohexyl-N,N-diméthylvaléramidine, 1-méthyl-2-cyclohexyliminopyrrolidine,3-butyl-3,4,5,6-tétrahydropyrimidine,N-(hexyliminométhyl)morpholine,N-([alpha]-(décylimino éthyl)éthyl) pyrrolidine,N'-décyl-N,N-dimethylformamidine, N'-dodécyl-N,N-diméthylformamidine, N'-cyclohexyl-N,N-acétamidine.

D'autres amines utiles comme ligands sont par exemple des dérivés hétérocycliques de type imidazoline, imidazole, tétrahydropyrimidine, dihydropyrimidine, pyridine, pyrrolidine, pipéridine ou pyrimidine. On peut aussi utiliser des amidines acyclique ou des guanidines.

Des exemples de ligands imidazoles sont les composés suivants: N-(2-hydroxyéthyl)imidazole, N-(3-aminopropyl)imidazole,4-(hydroxyméthyl)imidazole, 1-(tert-butoxycarbonyl)imidazole, 4-carboxyimidazole,1-butylimidazole, 4-formyl imidazole,1-(éthoxycarbonyl)imidazole, 2-méthyl imidazole, 1-triméthylsilylimidazole, 1(p-toluenesulfonyl)imidazole,1,1'-carbonylbisimidazole et 1-(2-cyanoéthyl)-2-éthyl-4-méthylimidazole.

Des exemples de ligands imidazoline sont les composés suivants: 1H-imidazole-1-éthanol, 2-(8Z)-8-heptadécényl-4,5-dihydro, 1H-imidazole-1-éthanol, 1H-imidazole-1-éthanol, 1H-imidazole, 4,5-dihydro,-2-(9Z)-9-octadécényl,oleyl hydroxyéthyl imidazoline, 1H-imidazole-1-éthanol,4,5-dihydro-2-undecyl-, 1H-imidazole-1-éthanol, 2-heptadécyl-4,5-dihydro et 1H-imidazole-1-éthanol, 2-nonyl-4,5-dihydro.

De préférence, le ligand de type amine $L^1$ ou $L^2$ est choisi parmi le groupe constitué par: les monoamines primaires de type alkylamine ayant au total de 1 à 40 atomes de carbone pour le radical alkyle, les monoamines secondaires de type dialkylamine ayant au total de 2 à 40 atomes de carbone pour les radicaux alkyles, les monoamines tertiaires de type trialkylamine ayant au total de 3 à 60 atomes de carbone pour les radicaux alkyles, les diamines alkylées ayant au total de 1 à 40 atomes de carbones pour les radicaux alkyles et les silanes aminés, et encore plus préférentiellement les ligands $L^1$ et $L^2$ sont choisis parmi le groupe constitué par les monoamines secondaires de type dialkylamine ayant au total de 2 à 20 atomes de carbone et les monoamines primaires de type alkylamine ayant au total de 1 à 40 atomes de carbone pour le radical alkyle.

Des ligands $L^1$ ou $L^2$ utiles selon l'invention sont les amines choisies parmi le groupe constitué par les amines: N,N-diméthyléthylènediamine, N,N'-diméthyléthylènediamine, N,N,N'-triméthyléthylènediamine, N,N'-diisopropyléthylènediamine, n-butylamine, n-propylamine, n-heptylamine, n-octylamine, n-nonylamime, tert-butylamine, isopropylamine, 2-éthylhexylamine, décylamine, dodécylamine linéaires ou ramifiées, N-méthyl-N-butylamine, N,N-dipropylamine, N,N-diisopropylamine, N-éthyl-N-butylamine, N,N-dibutylamine, N,N-diméthyl-N-butylamine, di(n-octyl)amine, N-n-propyléthylènediamine, , N,N,N',N'-tétraméthyléthylènediamine, 3-aminopropyltriméthoxysilane et 3-aminopropylméthyldiéthoxysilane.

Une autre liste de ligands utiles selon l'invention la liste d'amines suivantes :

- Amines primaires : N-Propylamine, N-Isopropylamine, N-Butylamine, N-Benzylamine, N-Hexylamine, N-cyclohexylamine, N-n-octylamine, N-(2-éthylhexyl)amine, N-(2-phényléthyl)amine, N-(3-méthoxypropyl)amine, N-Nonylamine, N-isononylamine,N-décylamine, N-dodécylamine, éthylènediamine et 1,3-diaminopropane.
- Amines secondaires: N,N-Dipropylamine, N,N-Diisopropylamine, N,N-Dibutylamine, N,N-Dihexylamine, N,N-Dicyclohexylamine, N,N-Di(2-méthoxyéthyl)amine, N,N-Dioctylamine, N,N-Di(2-éthylhexyl)amine, N,N-Diisononylamine, N,N-Di(tridécyl)amine, Morpholine, Piperidine, Pyrrolidine, 2,2,6,6-tétraméthylpipéridine, Pipérazine, N,N'-diméthyléthylènediamine, N,N'-diéthyléethylènediamine et N,N'-düsopropyléthylènediamine.

Comme exemples de ligands $C^1$, et lorsque le ligand $C^2$ est présent, sont par exemple des β-dicétonates ou des anions énolates d'un composé β-dicarbonylé de formule **(10')** suivante :

$$R^1COCHR^2COR^3 \qquad (\textbf{10}')$$

dans laquelle :

- $R^1$ et $R^3$, indépendemment l'un de l'autre, représentent un radical hydrocarboné en $C_1$ à $C_{30}$, un radical hydrocarboné en $C_6$ à $C_{30}$ comprenant un cycle aromatique ou un radical $-OR^4$ avec $R^4$ qui représente un radical hydrocarboné en $C_1$ à $C_{30}$,
- $R^2$ est un hydrogène ou un radical hydrocarboné en $C_1$ à $C_{30}$, , avec
- $R^1$ et $R^2$ peuvent être reliés par un radical, de préférence par un radical hydrocarboné en $C_3$ à $C_{30}$, pour former un cycle, et
- $R^2$ peut être relié à $R^1$ ou $R^3$ par un radical, de préférence par un radical hydrocarboné en $C_3$ à $C_{30}$, pour former un cycle.

Selon un mode de réalisation préféré, les ligands $C^1$, et lorsque le ligand $C^2$ est présent, sont des β-dicétonates ou des anions énolates d'un composé β-dicarbonylé de formule **(11')** suivante :

$$R^1COCHR^2COR^3 \qquad (\mathbf{11}')$$

dans laquelle :

- $R^1$ et $R^3$, indépendemment l'un de l'autre, représentent un radical hydrocarboné en $C_1$ à $C_{30}$, un radical hydrocarboné en $C_6$ à $C_{30}$ comprenant un cycle aromatique ou un radical $-OR^4$ avec $R^4$ qui représente un radical hydrocarboné en $C_1$ à $C_{30}$, et
- $R^2$ est un hydrogène ou un radical hydrocarboné en $C_1$ à $C_{30}$.

Selon un mode de réalisation préféré , les ligands β-dicétonates $C^1$, et lorsque le ligand $C^2$ est présent sont des β-dicétonates ou des anions énolates des composés β-dicarbonylé choisis parmi le groupe constitué par les β-dicétones: hexanedione-2,4; heptanedione-2,4; heptanedione-3,5; l'éthyl-3-pentanedione-2,4; méthyl-5-hexanedione-2,4; octanedione-2,4; octanedione-3,5; diméthyl-5,5-hexanedione-2,4; méthyl-6-heptanedione-2,4; diméthyl-2,2-nonanedione-3,5; diméthyl-2,6 heptanedione-3,5; 2-acétylcyclohexanone (*Cy-acac*); 2,2,6,6-tétraméthyl-3,5-heptanedione (*t-Bu-acac*); 1,1,1,5,5,5-hexafluoro-2,4-pentanedione (*F-acac*)]; benzoylacétone; dibenzoyl-méthane; 3-méthyl-2,4-pentadione; 3-acétyl-pentane-2-one; 3-acétyl-2-hexanone; 3-acétyl-2-heptanone; 3-acétyl-5-méthyl-2-hexanone; stéaroylbenzoylméthane; octanoylbenzoylméthane; 4-t-butyl-4'-méthoxy-dibenzoylméthane; 4,4'-diméthoxy-dibenzoylméthane et 4,4'-di-tert-butyl-dibenzoylméthane.

Selon un autre mode de réalisation préféré, les ligands β-dicétonates $C^1$, et lorsque le ligand $C^2$ est présent sont sont des anions β-cétoestérato choisis parmi le groupe constitué par les anions dérivés des composés suivants : les esters méthylique, éthylique, n-propylique, isopropylique, n-butylique, sec-butylique, isobutylique, tertiobutylique, isopentylique, n-hexylique, n-octylique, méthyl-1 heptylique, n-nonylique, n-décylique et n-dodécylique de l'acide acétylacétique.

Des catalyseurs de polycondensation **M** particulièrement avantageux sont les complexes de formule **(3')** suivante :

$$[(Zn\ (C^1)_2)_r(L^1)_{y'}]_{z'} \qquad \mathbf{(3')}$$

dans laquelle:

- le symbole $r \geq 1$ et de préférence r=1, 2, 3 ou 4,
- le symbole z' est un nombre entier supérieur ou égal à 1, et de préférence le symbole z'=1, 2, 3 ou 4, et encore plus préférentiellement z'=1 ou 2,
- le symbole $L^1$ est un ligand choisi dans le groupe constitué par les composés :

  • N,N-diméthyléthylènediamine, N,N'-diméthyléthylènediamine, N-(n-propyl)éthylènediamine, N,N,N'-triméthyléthylènediamine, N,N'-diisopropyléthylènediamine, N,N-diéthyléthylènediamine, N,N'-diéthyléthylènediamine, N,N,N',N'-tétraméthyléthylènediamine, N-méthylbutylamine, N-dibutylamine, n-propylamine, n-hexylamine, n-heptylamine, n-octylamine, n-nonylamine, n-décylamine, n-dodécylamine, tert-butylamine, isopropylamine, 2-éthylhexylamine, Bis(2-éthylhexyl)amine, diisononylamine, N,N-dipropylamine, N,N-dihexylamine, N,N-diheptylamine, N,N-dioctylamine N,N- diisopropylamine, N-éthyl-N-butylamine, N,N-diméthyl-N-butylamine, 3-aminopropyltriméthoxysilane et 3-aminopropylméthyldiéthoxysilane, et

- le symbole $C^1$ est choisi parmi le groupe constitué par les β-dicétonates ou les anions énolates des composés β-dicarbonylés suivants :

- pentanedione-2,4 ; hexanedione-2,4; heptanedione-2,4; octanedione-2,4 ; nonanedione-2,4 ; décanedione-2,4 ; undécanedione-2,4 ; dodécanedione-2,4 ; heptanedione-3,5; l'éthyl-3-pentanedione-2,4; méthyl-5-hexanedione-2,4; octanedione-2,4; octanedione-3,5; diméthyl-5,5-hexanedione-2,4; méthyl-6-heptanedione-2,4; diméthyl-2,2-nonanedione-3,5; diméthyl-2,6 heptanedione-3,5; 2-acétylcyclohexanone (*Cy-acac*); 2,2,6,6-tétraméthyl-3,5-heptanedione (*t-Bu-acac*); 1,1,1,5,5,5-hexafluoro-2,4-pentanedione (*F-acac*)]; benzoylacétone; dibenzoyl-méthane; 3-méthyl-2,4-pentadione; 3-acétyl-pentane-2-one; 3-acétyl-2-hexanone; 3-acétyl-2-heptanone; 3-acétyl-5-méthyl-2-hexanone; stéaroylbenzoylméthane; 4-t-butyl-4'-méthoxy-dibenzoylméthane; 4,4'-diméthoxy-dibenzoylméthane, 4,4'-di-tert-butyl-dibenzoylméthane ; 2,2,6,6-tétraméthyl-3,5-heptanedione, éthyle acétoacétate et isopropyle acétoacétate,
- une β-dicétone stéaroylbenzoylméthane ou 1-phényl-3-eicosanedione de formule (7') suivante :

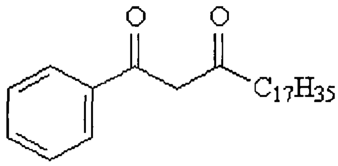

**(7')**

- une β-dicétone 2,2,7-triméthyl-3,5-octanedione de formule **(8')** suivante :

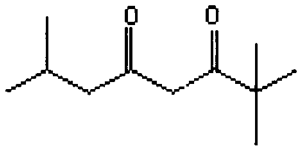

**(8')**

- et les esters de l'acide acétylacétique de formule (9') suivante :

**$CH_3COCH_2COOR$** **(9')**

- avec R= méthyle, éthyle, n-propyle, isopropyle, n-butyle, sec-butyle, isobutyle, tertiobutyle, isopentyle, n-hexyle, n-octyle, méthyl-1 heptyle, n-nonyle, n-décyle et n-dodécyle,

Un catalyseur de polycondensation **M** particulièrement avantageux selon l'invention est un complexe choisi parmi le groupe constitué par les complexes suivants :

- [Zn(R50)$_2$ (N,(n-propyl)éthylènediamine)]
- [Zn(R50)$_2$ (N,(n-propyl)éthylènediamine)$_2$]
- [Zn(R50)$_2$ (N,N-diméthyléthylènediamine)],
- [Zn(R50)$_2$ (N,N-diméthyléthylènediamine)$_2$],
- [Zn(R50)$_2$ (N,N'-diméthyléthylènediamine)],
- [Zn(R50)$_2$ (N,N'-diméthyléthylènediamine)$_2$],
- [Zn(R50)$_2$ (N,N,N'-triméthyléthylènediamine)],
- [Zn(R50)$_2$ (N,N,N'-triméthyléthylènediamine)$_2$],
- [Zn(R50)$_2$ (N,N'-diisopropyléthylènediamine)],
- [Zn(R50)$_2$ (N,N'-diisopropyléthylènediamine)$_2$],
- [Zn(R50)$_2$ (N,N-diéthyléthylènediamine)],
- [Zn(R50)$_2$ (N,N-diéthyléthylènediamine)$_2$],
- [Zn(R50)$_2$ (N-méthylbutylamine)],
- [Zn(R50)$_2$ (N-méthylbutylamine)$_2$],

- [Zn(R50)$_2$ (N-dibutylamine)],
- [Zn(R50)$_2$ (N-dibutylamine)$_2$],
- [Zn(R50)$_2$ (n-propylamine)],
- [Zn(R50)$_2$ (n-propylamine)$_2$],
- [Zn(R50)$_2$ (n-hexylamine)],
- [Zn(R50)$_2$ (n-hexylamine}$_2$],
- [Zn(R50)$_2$ (n-heptylamine)],
- [Zn(R50)$_2$ (n-heptylamine)$_2$],
- [Zn(R50)$_2$ (n-octylamine)],
- [Zn(R50)$_2$ (n-octylamine)$_2$],
- [Zn(R50)$_2$ (n-nonylamine)],
- [Zn(R50)$_2$ (n-nonylamine)$_2$],
- [Zn(R50)$_2$ (n-décylamine)],
- [Zn(R50)$_2$ (n-décylamine)$_2$],
- [Zn(R50)$_2$ (n-dodécylamine)],
- [Zn(R50)$_2$ (n-dodécylamine)$_2$],
- [Zn(R50)$_2$ (N,N-diméthyl-N-butylamine)],
- [Zn(R50)$_2$ (N,N-diméthyl-N-butylamine)$_2$],
- [Zn(R50)$_2$ (N-éthyl-N-butylamine)],
- [Zn(R50)$_2$ (N-éthyl-N-butylamine)$_2$],
- [Zn(R50)$_2$ (N,N-diisopropylamine)],
- [Zn(R50)$_2$ (N,N-diisopropylamine)$_2$],
- [Zn(R50)$_2$ (N,N-dipropylamine)],
- [Zn(R50)$_2$ (N,N-dipropylamine)$_2$],
- [Zn(TMOD)$_2$ (N-(n-propyl)éthylènediamine)],
- [Zn(TMOD)$_2$ (N-(n-propyl)éthylènediamine)$_2$],
- [Zn(TMOD)$_2$ (N,N-diméthyléthylènediamine)],
- [Zn(TMOD)$_2$ (N,N-diméthyléthylènediamine)$_2$],
- [Zn(TMOD)$_2$ (N,N'-diméthyléthylènediamine)],
- [Zn(TMOD)$_2$ (N,N'-diméthyléthylènediamine)$_2$],
- [Zn(TMOD)$_2$ (N,N,N'-triméthyléthylènediamine)],
- [Zn(TMOD)$_2$ (N,N,N'-triméthyléthylènediamine)$_2$],
- [Zn(TMOD)$_2$ (N,N'-diisopropyléthylènediamine)],
- [Zn(TMOD)$_2$ (N,N'-diisopropyléthylènediamine)$_2$],
- [Zn(TMOD)$_2$ (N,N-diéthyléthylènediamine)],
- [Zn(TMOD)$_2$ (N,N-diéthyléthylènediamine)$_2$],
- [Zn(TMOD)$_2$ (N-méthylbutylamine)],
- [Zn(TMOD)$_2$ (N-méthylbutylamine)$_2$],
- [Zn(TMOD)$_2$ (N-dibutylamine)],
- [Zn(TMOD)$_2$ (N-dibutylamine)$_2$],
- [Zn(TMOD)$_2$ (n-propylamine)],
- [Zn(TMOD)$_2$ (n-propylamine)$_2$],
- [Zn(TMOD)$_2$ (n-hexylamine)],
- [Zn(TMOD)$_2$ (n-hexylamine)$_2$],
- [Zn(TMOD)$_2$ (n-heptylamine)],
- [Zn(TMOD)$_2$ (n-heptylamine)$_2$],
- [Zn(TMOD)$_2$ (n-octylamine)],
- [(Zn(TMOD)$_2$ n-octylamine)$_2$],
- [Zn(TMOD)$_2$ (n-nonylamine)],
- [Zn(TMOD)$_2$ (n-nonylamine)$_2$],
- [Zn(TMOD)$_2$ (n-décylamine)],
- [Zn(TMOD)$_2$ (n-décylamine)$_2$],
- [Zn(TMOD)$_2$ (n-dodécylamine)],
- [Zn(TMOD)$_2$ (n-dodécylamine)$_2$],
- [Zn(TMOD)$_2$ (N,N-diméthyl-N-butylamine)],
- [Zn(TMOD)$_2$ (N,N-diméthyl-N-butylamine)$_2$],
- [Zn(TMOD)$_2$ (N-éthyl-N-butylamine)],
- [Zn(TMOD)$_2$ (N-éthyl-N-butylamine)$_2$],

- [Zn(TMOD)$_2$ (N,N- diisopropylamine)],
- [Zn(TMOD)$_2$ (N,N- diisopropylamine)$_2$],
- [Zn(TMOD)$_2$ (N,N-dipropylamine)],
- [Zn(TMOD)$_2$ (N,N-dipropylamine)$_2$],
- [Zn(DPM)$_2$ (N-(n-propyl)éthylènediamine)],
- [Zn(DPM)$_2$ (N-(n-propyl)éthylènediamine)$_2$],
- [Zn(DPM)$_2$ (N,N-diméthyléthylènediamine)],
- [Zn(DPM)$_2$ (N,N-diméthyléthylènediamine)$_2$],
- [Zn(DPM)$_2$ (N,N'-diméthyléthylènediamine)],
- [Zn(DPM)$_2$ (N,N'-diméthyléthylènediamine)$_2$],
- [Zn(DPM)$_2$ (N,N,N'-triméthyléthylènediamine)],
- [Zn(DPM)$_2$ (N,N,N'-triméthyléthylènediamine)$_2$],
- [Zn(DPM)$_2$ (N,N'-diisopropyléthylènediamine)],
- [Zn(DPM)$_2$ (N,N'-diisopropyléthylènediamine)$_2$],
- [Zn(DPM)$_2$ (N,N-diéthyléthylènediamine)],
- [Zn(DPM)$_2$ (N,N-diéthyléthylènediamine)$_2$],
- [Zn(DPM)$_2$ (N-méthylbutylamine)],
- [Zn(DPM)$_2$ (N-méthylbutylamine)$_2$],
- [Zn(DPM)$_2$ (N-dibutylamine)],
- [Zn(DPM)$_2$ (N-dibutytamine)$_2$],
- [Zn(DPM)$_2$ (n-propylamine)],
- [Zn(DPM)$_2$ (n-propylamine)$_2$],
- [Zn(DPM)$_2$ (n-hexylamine)],
- [Zn(DPM)$_2$ (n-hexylamine)$_2$],
- [Zn(DPM)$_2$ (n-heptylamine)],
- [Zn(DPM)$_2$ (n-heptylamine)$_2$],
- [Zn(DPM)$_2$ (n-octylamine)],
- [Zn(DPM)$_2$ (n-octylamine)$_2$],
- [Zn(DPM)$_2$ (n-nonylamine)],
- [Zn(DPM)$_2$ (n-nonylamine)$_2$],
- [Zn(DPM)$_2$ (n-décylamine)],
- [Zn(DPM)$_2$ (n-décylamine)$_2$],
- [Zn(DPM)$_2$ (n-dodécylamine)],
- [Zn(DPM)$_2$ (n-dodécylamine)$_2$],
- [Zn(DPM)$_2$ (N,N-diméthyl-N-butylamine)],
- [Zn(DPM)$_2$ (N,N-diméthyl-N-butylamine)$_2$],
- [Zn(DPM)$_2$ (N-éthyl-N-butylamine)],
- [Zn(DPM)$_2$ (N-éthyl-N-butylamine)$_2$],
- [Zn(DPM)$_2$ (N,N- diisopropylamine)],
- [Zn(DPM)$_2$ (N,N- diisopropylamine)$_2$],
- [Zn(DPM)$_2$ (N,N-dipropylamine)],
- [Zn(DPM)$_2$ (N,N-dipropylamine)$_2$],
- [Zn(acac)$_2$ (N,(n-propyl)éthylènediamine)],
- [Zn(acac)$_2$ (N,(n-propyl)éthylènediamine)$_2$],
- [Zn(acac)$_2$ (N,N-diméthyléthylènediamine)],
- [Zn(acac)$_2$ (N,N-diméthyléthylènediamine)$_2$],
- [Zn(acac)$_2$ (N,N'-diméthyléthylènediamine)],
- [Zn(acac)$_2$ (N,N'-diméthyléthylènediamine)$_2$],
- [Zn(acac)$_2$ (N,N,N'-triméthyléthylènediamine)],
- [Zn(acac)$_2$ (N,N,N'-triméthyléthylènediamine)$_2$],
- [Zn(acac)$_2$ (N,N'-diisopropyléthylènediamine)],
- [Zn(acac)$_2$ (N,N'-diisopropyléthylènediamine)$_2$],
- [Zn(acac)$_2$ (N,N-diéthyléthylènediamine)],
- [Zn(acac)$_2$ (N,N-diéthyléthylènediamine)$_2$],
- [Zn(acac)$_2$ (N-méthylbutylamine)],
- [Zn(acac)$_2$ (N-méthylbutylamine)$_2$],
- [Zn(acac)$_2$ (N-dibutylamine)],
- [Zn(acac)$_2$ (N-dibutylamine)$_2$],

- [Zn(acac)$_2$ (n-propylamine)],
- [Zn(acac)$_2$ (n-propylamine)2],
- [Zn(acac)$_2$ (n-hexylamine)],
- [Zn(acac)$_2$ (n-hexylamine)$_2$],
- [Zn(acac)$_2$ (n-heptylamine)],
- [Zn(acac)$_2$ (n-heptylamine)$_2$],
- [Zn(acac)$_2$ (n-octylamine)],
- [Zn(acac)$_2$ (n-octylamine)$_2$],
- [Zn(acac)$_2$ (n-nonylamine)],
- [Zn(acac)$_2$ (n-nonylamine)$_2$],
- [Zn(acac)$_2$ (n-décylamine)],
- [Zn(acac)$_2$ (n-décylamine)$_2$],
- [Zn(acac)$_2$ (n-dodécylamine)],
- [Zn(acac)$_2$ (n-dodécylamine)$_2$],
- [Zn(acac)$_2$ (N,N-diméthyl-N-butylamine)],
- [Zn(acac)$_2$ (N,N-diméthyl-N-butylamine)$_2$],
- [Zn(acac)$_2$ (N-éthyl-N-butylamine)],
- [Zn(acac)$_2$ (N-éthyl-N-butylamine)$_2$],
- [Zn(acac)$_2$ (N,N- diisopropylamine)],
- [Zn(acac)$_2$ (N,N-diisopropylamine)$_2$],
- [Zn(acac)$_2$ (N,N-dipropylamine)],
- [Zn(acac)$_2$ (N,N-dipropylamine)$_2$
- [Zn(UDD)$_2$ (N,(n-propyl)éthylènediamine)]
- [Zn(UDD)$_2$ (N,(n-propyl)éthylènediamine)$_2$]
- [Zn(UDD)$_2$ (N,N-diméthyléthylènediamine)],
- [Zn(UDD)$_2$ (N,N-diméthyléthylènediamine)$_2$],
- [Zn(UDD)$_2$ (N,N'-diméthyléthylènediamine)],
- [Zn(UDD)$_2$ (N,N'-diméthyléthylènediamine)$_2$],
- [Zn(UDD)$_2$ (N,N,N'-triméthyléthylènediamine)],
- [Zn(UDD)$_2$ (N,N,N'-triméthyléthylènediamine)$_2$],
- [Zn(UDD)$_2$ (N,N'-diisopropyléthylènediamine)],
- [Zn(UDD)$_2$ (N,N'-diisopropyléthylènediamine)$_2$],
- [Zn(UDD)$_2$ (N,N-diéthyléthylènediamine)],
- [Zn(UDD)$_2$ (N,N-diéthyléthylènediamine)$_2$],
- [Zn(UDD)$_2$ (N-méthylbutylamine)],
- [Zn(UDD)$_2$ (N-méthylbutylamine)$_2$],
- [Zn(UDD)$_2$ (N-dibutylamine)],
- [Zn(UDD)$_2$ (N-dibutylamine)$_2$],
- [Zn(UDD)$_2$ (n-propylamine)],
- [Zn(UDD)$_2$ (n-propylamine)$_2$],
- [Zn(UDD)$_2$ (n-hexylamine)],
- [Zn(UDD)$_2$ (n-hexylamine)$_2$],
- [Zn(UDD)$_2$ (n-heptylamine)],
- [Zn(UDD)$_2$ (n-heptylamine)$_2$],
- [Zn(UDD)$_2$ (n-octylamine)],
- [Zn(UDD)$_2$ (n-octylamine)$_2$],
- [Zn(UDD)$_2$ (n-nonylamine)],
- [Zn(UDD)$_2$ (n-nonylamine)$_2$],
- [Zn(UDD)$_2$ (n-décylamine)],
- [Zn(UDD)$_2$ (n-décylamine)$_2$],
- [Zn(UDD)$_2$ (n-dodécylamine)],
- [Zn(UDD)$_2$ (n-dodécylamine)$_2$],
- [Zn(UDD)$_2$ (N,N-diméthyl-N-butylamine)],
- [Zn(UDD)$_2$ (N,N-diméthyl-N-butylamine)$_2$],
- [Zn(UDD)$_2$ (N-éthyl-N-butylamine)],
- [Zn(UDD)$_2$ (N-éthyl-N-butylamine)$_2$],
- [Zn(UDD)$_2$ (N,N- diisopropylamine)],
- [Zn(UDD)$_2$ (N,N- diisopropylamine)$_2$],

- [Zn(UDD)$_2$ (N,N-dipropylamine)],
- [Zn(UDD)$_2$ (N,N-dipropylamine)$_2$], et

• avec le ligand R50 qui est la β-dicétonate ou l'anion énolate du composé β-dicarbonylé suivant= β-dicétone stéaroylbenzoylméthane de formule **(7')** suivante :

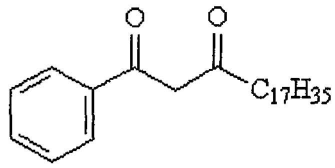

**(7')**

• avec le ligand acac qui est la β-dicétonate ou l'anion énolate du composé β-dicarbonylé suivant = pentanedione-2,4
• avec le ligand UDD qui est la β-dicétonate ou l'anion énolate du composé β-dicarbonylé suivant = undecanedione-2,4
• avec le ligand DPM qui est la β-dicétonate ou l'anion énolate du composé β-dicarbonylé suivant = 2,2,6,6-tétraméthyl-3,5-heptanedione,
• et avec le ligand TMOD qui est la β-dicétonate ou l'anion énolate du composé β-dicarbonylé suivant = 2,2,7-triméthyl-3,5-octanedione de formule **(8')** suivante :

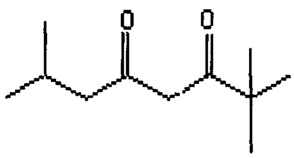

**(8')**

et leurs mélanges.

La quantité de catalyseurs de polycondensation **M** selon l'invention est comprise entre 0,01 et 10 % en poids de la masse totale de la composition **Z,** de préférence entre 0,1 et 5 %, que ce soit une préparation mono ou bicomposant.
Selon un mode de réalisation préférée, la composition selon l'invention est exempte de catalyseur à base d'étain tels que par exemple des dicarboxylates d'étain. Ceci est rendu possible du fait de la bonne activité catalytique du catalyseur de polycondensation M selon l'invention.
De préférence, le composé organosilicié **A**' est un polyorganosiloxane comprenant :

(i) au moins deux motifs siloxyles de formule **(4')** suivante :

$$R^1_a Z_b Si O_{\left(\frac{4-(a+b)}{2}\right)}$$

**(4')**

dans laquelle:

- les symboles $R^1$, identiques ou différents, représentent des radicaux hydrocarbonés monovalents en $C_1$ à $C_{30}$,
- les symboles Z, identiques ou différents, représentent chacun un groupement hydrolysable et condensable ou un groupement hydroxy et de préférence sont choisis parmi le groupe constitué par les groupements de type: hydroxy, alcoxy, alcoxy-alkylène-oxy, amino, amido, acylamino, aminoxy, iminoxy, cétiminoxy, acyloxy, iminoxi, cétiminoxy et énoxy et encore plus préférentiellement Z est un groupement hydroxy,

- a est égal à 0, 1 ou 2, b est égal à 1, 2 ou 3, la somme a + b est égale à 1, 2 ou 3,

(ii) et éventuellement un ou plusieurs motif(s) siloxyle(s) de formule **(5')** suivante :

$$R_c SiO_{\left(\frac{4-c}{2}\right)}$$

**(5')**

dans laquelle :

- les symboles R, identiques ou différents, représentent des radicaux hydrocarbonés monovalent en $C_1$ à $C_{30}$ éventuellement substitués par un ou plusieurs atomes d'halogène ou par des groupements : amino, éther, ester, époxy, mercapto ou cyano, et
- le symbole c est égal à 0, 1, 2 ou 3.

De préférence, le composé organosilicié **A'** selon l'invention sera porteur d'au moins deux groupements choisis parmi le groupe constitué par les groupements de type : hydroxy, alcoxy, alcoxy-alkylène-oxy, amino, amido, acylamino, aminoxy, iminoxy, cétiminoxy, acyloxy et énoxy.

Un autre aspect important pour une composition réticulable par des réactions de condensation est le temps de mise en oeuvre (« pot-life » ou « temps de travail »), c'est-à-dire le temps pendant lequel la composition peut être utilisée après mélange sans durcir. Ce temps doit être suffisamment long pour permettre son utilisation mais suffisamment court pour obtenir couche durcie au plus tard quelques minutes ou quelques heures après son dépôt sur le support à traiter. En outre, les composants réactifs en présence du catalyseur doivent conférer au mélange catalysé un temps d'étalement qui ne varie pas en fonction de la durée au stockage.

Ainsi, lorsque le composé organosilicié **A'** est un polyorganosiloxane porteur d'au moins deux groupements hydroxy (de type silanol ≡SiOH), il a été découvert de manière surprenante et inattendue que lorsqu'il est mis en oeuvre dans une composition selon l'invention qui comprend comme catalyseur un complexe de zinc ayant des ligands carboxylates et amine selon l'invention, il est alors possible d'augmenter ou de diminuer le « temps de travail » (ou « pot-life ») en faisant simplement varier la masse molaire du composé organosilicié **A'** dans un intervale spécifique. Ainsi en faisant varier la masses molaires moyennes en poids ($M_w$) du composé organosilicié **A'** dans un intervale de valeurs supérieures à au moins deux fois la masse molaire d'enchevêtrement $M_e$, il est alors possible de moduler le « temps de travail » (ou « pot-life ») et ceci sans détériorer les propriétés mécaniques (par exemple la dureté shore A) de l'élastomère obtenu après réticulation. Sans être tenu par la théorie, la formation de points d'enchevêtrement à partir d'une certaine longueur de chaînes macromoléculaires pour chaque type de polyorganosiloxane est donc possible à partir d'une certaine masse molaire d'enchevêtrement du polymère que l'on identitifie par le symbole « $M_e$ ». Ainsi, la « masse molaire critique » notée $M_c$ est définie comme étant égale à environ deux fois la masse molaire d'enchevêtrement $M_e$. Au-dessus de la masse molaire critique $M_c$, il a donc été possible de contrôler le « temps de travail » (ou « pot-life ») de la composition silicone avant réticulation.

A titre indicatif et suivant le type de groupement présent dans le polyorganosiloxane porteur d'au moins deux groupements hydroxy de type silanol ≡SiOH, la masse molaire d'enchevêtrement $M_e$ se situe entre 15000 et 30000 g/mole.

Ainsi un mode de réalisation avantageux consiste à mettre en oeuvre un composé organosilicé **A'** qui est un polyorganosiloxane porteur d'au moins deux groupements hydroxy de type silanol ≡SiOH dont la masse molaire moyenne en poids $M_w$ est supérieure à au moins deux fois la masse molaire d'enchevêtrement $\mathbf{M_e}$**.** Le contrôle, grace au choix de la masse molaire moyenne en poids $M_w$ du composé organosilicié **A'**, de la présence ou non d'enchevêtrement des chaînes du polyorganosiloxane porteur d'au moins deux groupements hydroxy de type silanol ≡SiOH permet à la fois de contrôler :

- les propriétés mécaniques de l'élastomère obtenu <u>après réticulation</u> de la composition selon l'invention et notamment la dureté shore A, et
- le « temps de travail » pendant lequel la composition est manipulable <u>avant réticulation.</u>

Le contrôle de l'enchevêtrement des chaînes du polyorganosiloxane porteur d'au moins deux groupements hydroxy de type silanol ≡SiOH se fera en choisissant judicieusement la masse molaire moyenne en poids $M_w$ du polymère de manière à ce que sa masse molaire soit au moins deux fois supérieures à la masse molaire d'enchevêtrement, c'est-à-dire qu'elle sera supérieure à la masse molaire critique $M_c$ de ce polymère.

De préférence, le composé organosilicié **A'** est un polyorganosiloxane de formule générale **(6')** :

$$Z_nR_{3-n}Si\text{-}O\text{-}(SiR_2\text{-}O)_x\text{-}SiR_{3-n}Z_n \qquad \textbf{(6')}$$

dans laquelle :

- les symbole Z, identiques ou différents, représentent chacun un groupement hydrolysable et condensable ou un groupement hydroxy et de préférence sont choisis parmi le groupe constitué par les groupements de type: hydroxy, alcoxy, alcoxy-alkylène-oxy, amino, amido, acylamino, aminoxy, iminoxy, cétiminoxy, acyloxy et énoxy,
- les symboles R, identiques ou différents, représentent des radicaux hydrocarbonés monovalents en $C_1$ à $C_{30}$ éventuellement substitués par un ou plusieurs atomes d'halogène ou par des groupements : amino, éther, ester, époxy, mercapto ou cyano,
- le symbole n est égal à 1, 2 ou 3, de préférence égal à 2 ou 3 et lorsque Z est un groupe hydroxy alors n=1,
- le symbole x est compris entre 200 et 10000, de préférence entre 200 et 1000 et encore plus préférentiellement entre 250 et 600.

Dans les formules **(4'), (5')** et **(6')** les symboles $R^1$ et R sont de préférence :

- Des radicaux alkyles ayant de 1 à 20 atomes de carbone éventuellement substitués par: un ou plusieurs groupes aryles ou cycloalkyles, par un ou plusieurs atomes d'halogène ou par des groupements : amino, éther, ester, époxy, mercapto, cyano ou (poly)glycol. On peut citer par exemple les radicaux : méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle,
- des radicaux cycloalkyles et halogénocycloalkyles ayant de 5 à 13 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle,
- des radicaux aryles et halogénoaryles mononucléaires ayant de 6 à 13 atomes de carbone tels que les radicaux : phényle, tolyle, xylyle, chlorophényle, dichlorophényle ou trichlorophényle, ou
- des radicaux alcényles ayant de 2 à 8 atomes de carbone tels que les radicaux : vinyle, allyle ou butène-2 yle.

La viscosité dynamique à 25°C du composé organosilicié **A'** est généralement comprise entre 50 et 5000000 mPa.s et de préférence entre 100 et 1000000 mPa.s. Il est précisé que les valeurs des viscosités dans le présent mémoire sont les valeurs des viscosités dynamiques mesurées à 25°C à l'aide d'un viscosimètre BROOKFIELD.

Dans le cas particulier ou le composé organosilicié **A'** est un polyorganosiloxane de formule générale **(6')** avec des symboles **Z** de type hydroxyle, alors le symbole n sera de préférence égal à 1. Dans ce cas, on préfère utiliser des polyorganosiloxanes alpha-oméga dihydroxylés qui sont généralement des huiles dont la viscosité varie le plus souvent entre 100 mPa.s à 25°C à 1 000 000 mPa.s à 25°C, de préférence de 800 mPa.s à 500 000 mPa.s à 25°C. Lorsque l'on souhaite contrôler la durée de vie du bain on fera en sorte que le choix du composé organosilicié **A'** se fasse en fonction de la masse molaire moyenne en poids $M_w$ ($M_w$ supérieure à au moins deux fois la masse molaire d'enchevêtrement $M_e$). Pour l'application visée et lorsque le composé est un polydiméthylsiloxane terminé par des fonctions silanols (≡SiOH), sa viscosité sera de préférence supérieure à 750 mPa.s, encore plus préférentiellement comprise entre 1000 mPa.s et 20000 mPa.s.

Lorsque le composé organosilicié **A'** est un polyorganosiloxane, il est avantageux d'utiliser ceux dont au moins 60 % des radicaux R et $R^1$ (dans les formules **4'** et **5'**) ou du radical R (dans la formule **6'**) sont des radicaux méthyles, les autres radicaux étant généralement des radicaux phényles et/ou vinyles. type : alcoxy, alcoxy-alkylène-oxy, amino, amido, acylamino, aminoxy, iminoxy, cétiminoxy, acyloxy et énoxy.

Lorsque le composé organosilicé **A'** présente des groupements Z hydrolysables et condensables selon l'invention et est un polyorganosiloxane, on le décrit le plus souvent comme un polymère fonctionnalisé et correspond à une forme stable en l'absence d'humidité qui peut être utilisé dans une composition mono-composante et être ainsi conditionnée en pot, cartouche ou fût hermétiquement fermées, qui seront ouvert par l'opérateur lors de l'utilisation pour l'application sur le support à traiter. Lorsque le groupement organosilicié **A'** présente des groupements Z de type hydroxy, on peut alors les fonctionnaliser in-situ dans les compostion mono-composantes, via un catalyseur de fonctionnalisation tel que la lithine, de manière à pouvoir les stocker et les conditionner en cartouches hermétiquement fermées.

Comme exemple de groupements hydrolysables et condensables Z de type alcoxy, on peut citer les groupes ayant de 1 à 8 atomes de carbone comme les groupes : méthoxy, éthoxy, n-propoxy, iso-propoxy, n-butoxy, isobutoxy, sec-butoxy, tert-butoxy, 2-méthoxyéthoxy, hexyloxy ou octyloxy.

Comme exemple de groupements hydrolysables et condensables Z de type alcoxy-alkylène-oxy, on peut citer le groupement méthoxy-éthylène-oxy.

Comme exemple de groupements hydrolysables et condensables Z de type amino, on peut citer les groupements : méthylamino, diméthylamino, éthylamino, diéthylamino, n-butylamino, sec-butylamino ou cyclohexylamino.

Comme exemple de groupements hydrolysables et condensables Z de type amido on peut citer le groupement N-méthyl-acétamido.

Comme exemple de groupements hydrolysables et condensables Z de type acylamino, on peut citer le groupement benzoyl-amino.

Comme exemple de groupements hydrolysables et condensables Z aminoxy, on peut citer les groupements : diméthylaminoxy, diéthylaminoxy, dioctylaminoxy ou diphénylaminoxy.

Comme exemple de groupements hydrolysables et condensables Z de type iminoxy et en particulier cétiminoxy, on peut citer les groupements dérivés des oximes suivantes : acétophénone-oxime, acétone-oxime, benzophénon-oxime, méthyl-éthyl-cétoxime, di-isopropylcétoxyme ou méthylisobutyl-cétoxime.

Comme exemple de groupements hydrolysables et condensables Z de type énoxy on peut citer le groupement 2-propénoxy.

Selon un mode de réalisation préféré, l'agent de réticulation **B'** est un composé de silicium dont chaque molécule comprend au moins trois groupements hydrolysables et condensables **Y** et ledit agent de réticulation **B'** ayant la formule **(7')** suivante :

$$R'_{(4-a)}SiY_a \qquad (7')$$

formule dans laquelle :

- le symbole R' est un radical hydrocarboné monovalent comprenant de 1 à 30 atomes de carbone,
- le symbole Y est un groupement alcoxy, alcoxy-alkylène-oxy, amino, amido, acylamino, aminoxy, iminoxy, cétiminoxy, acyloxy et énoxy et de préférence Y est un groupement alcoxy, acyloxy, énoxy, cétiminoxy ou oxime,
- le symbole a = 3 ou 4.

Des exemples de groupements Y sont les mêmes que ceux cités ci-dessus lorsque le symbole Z est un groupement hydrolysable et condensable, c'est-à-dire différent d'un groupement hydroxyle.

Comme exemple d'agent de réticulation **B'** on peut citer les silanes alcoxy de formule générale **(8)** suivante et les produits d'hydrolyse partielle de ce silane :

$$R^2_k\ Si(OR^3)_{(4-k)} \qquad (\mathbf{8})$$

- dans laquelle :
- les symboles $R^2$, identiques ou différents, représentent des radicaux alkyles ayant de 1 à 8 atomes de carbone, tels que les radicaux méthyle, éthyle, propyle, butyle, pentyle, éthyl-2 hexyle, des radicaux oxyalkylènes en $C_3$-$C_6$,
- le symbole $R^3$ représente un groupe hydrocarboné aliphatique saturé ou insaturé, linéaire ou ramifié, un groupe carbocyclique, saturé ou insaturé et/ou aromatique, monocyclique ou polycyclique,
- et k est égal à 0, 1 ou 2.

Comme exemple de radicaux alcoxyalkylène en $C_3$-$C_6$ on peut citer les radicaux suivants :

$CH_3OCH_2CH_2$-
$CH_3OCH_2CH(CH_3)$-
$CH_3OCH(CH_3)CH_2$-
$C_2H_5OCH_2CH_2CH_2$-

Le symbole $R^3$ représente de préférence un radical hydrocarboné en $C_1$-$C_{10}$ englobant :

- les radicaux alkyles en $C_1$-$C_{10}$ tels que les radicaux méthyle, éthyle, propyle, butyle, pentyle, éthyl-2 hexyle, octyle, décyle,
- les radicaux vinyles, allyles, et
- les radicaux cycloalkyles en $C_5$-$C_8$ tels que les radicaux : phényle, tolyle et xylyle.

Ces agents de réticulation **B'** sont des produits accessibles sur le marché des silicones ; de plus leur emploi dans les compositions durcissant dès la température ambiante est connu ; il figure notamment dans les brevets français

FR-A-1 126 411, FR-A-1 179 969, FR-A-1 189 216, FR-A-1 198 749, FR-A-1 248 826, FR-A-1 314 649, FR-A-1 423 477, FR-A-1 432 799 et FR-A-2 067 636.

Parmi les agents de réticulation **B',** on préfère plus particulièrement les alkyltrialcoxysilanes, les silicates d'alkyle et les polysilicates d'alkyle, dans lesquels les radicaux organiques sont des radicaux alkylés ayant de 1 à 4 atomes de carbone.

Comme autres exemples d'agents de réticulation **B'** qui peuvent être utilisés, on cite plus particulièrement le polysilicate d'éthyle, le polysilicate de n-propyle et les silanes suivants: le propyltriméthoxysilane, le méthyltriméthoxysilane, l'éthyltriméthoxysilane, le vinyltriéthoxysilane, le vinyltriméthoxysilane le méthyltriéthoxysilane, le propyltriéthoxysilane, le tétraméthoxysilane, le tétraéthoxysilane, le tétrapropoxysilane, le tétrabutoxysilane le 1,2-bis(triméthoxysilyl)éthane, le 1,2-bis(triéthoxysilyl)éthane, le tétraisopropoxysilane, le phényltriéthoxysilane, le méthyltris(méthyléthylcétoximo)silane, le 3-cyanopropyltriméthoxysilane, le 3-cyanopropyl-triéthoxysilane, 3-(glycidyloxy)propyltriéthoxysilane, le vinyltris(méthyléthylcétoximo)silane, le tétrakis(méthyléthylcétoximo)silane, les acyloxysilanes tels que le vinyltriacétoxysilane, le méthyltriacétoxysilane ou l'éthyltriacétoxysilane ou encore ceux de formules suivantes :

$CH_3Si(OCH_3)_3$ ; $C_2H_5Si(OC_2H_5)_3$ ; $C_2H_5Si(OCH_3)_3$
$CH_2{=}CHSi(OCH_3)_3$; $CH_2{=}CHSi(OCH_2CH_2OCH_3)_3$
$C_6H_5Si(OCH_3)_3$ ; $[CH_3][OCH(CH_3)CH_2OCH_3]Si[OCH_3]_2$
$Si(OCH_3)_4$ ; $Si(OC_2H_5)_4$; $Si(OCH_2CH_2CH_3)_4$; $Si(OCH_2CH_2CH_2CH_3)_4$
$Si(OC_2H_4OCH_3)_4$ ; $CH_3Si(OC_2H_4OCH_3)_3$ ; $CH_3Si(OC_2H_5)_3$ ;

On utilise généralement de 0,1 à 60 parties en poids d'agent de réticulation **B'** pour 100 parties en poids de composé organosilicié **A'.** De préférence, on utilise de 1 à 15 parties en poids pour 100 parties en poids de composé organosilicié **A'.**

Selon un mode de réalisation particulièrement avantageux, la composition **Z** comprend :

(i) au moins un composé organosilicié **A'** comprenant au moins deux groupements hydrolysables et condensables, identiques ou différent, ou au moins deux fonctions silanol ≡SiOH,
(ii) au moins un agent de réticulation **B',**
(iii) une quantité catalytiquement efficace d'au moins un catalyseur de polycondensation **M** qui est un complexe de zinc comprenant dans sa structure deux types de ligand : carboxylate et amine.
(iv) au moins un composé **L'** qui exsude à la surface de la couche antisalissure lorsque le réseau élastomère est formé améliorant ainsi l'effet "antisalissure",
(v) éventuellement au moins un promoteur d'adhérence **E',**
(vi) éventuellement au moins une charge minérale siliceuse, organique et/ou non siliceuse **F',**
(vii) éventuellement au moins un pigment, une base colorante ou un agent de coloration **H',** et
(viii) éventuellement au moins un solvant **K'.**

Des exemples de composés **L'** qui exsudent à la surface de la couche antisalissure lorsque le réseau élastomère est formé améliorant ainsi l'effet "antisalissure" sont par exemple les composés a), b), c), d) e), f) et g) suivants :

Les composés a) sont des huiles polyorganosiloxanes répondant à la formule générale **(II)** suivante :

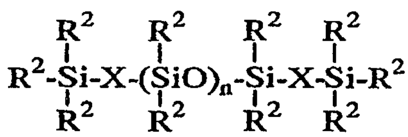

**(II)**

dans laquelle :

- $R^2$ est un radical alkyle, aryle ou alkényle, les radicaux méthyle et phényle sont préférés (un exemple particulièrement préféré étant une huile méthylphénylpolysiloxane telle que décrite par exemple dans le brevet US-A-4 025 693),
- X est un atome d'oxygène ou un groupe hydrocarboné divalent de 1 à 8 atome de carbone, et
- n est un nombre défini de manière à obtenir un diorganopolysiloxane ayant une viscosité comprise entre 10 et $1x10^6$ $mm^2/s$ à 25°C.

Ces huiles polyorganosiloxanes peuvent éventuellement être greffées et comprendre des groupements acrylique, amide, amine, carbonyle, carboxyliques, carboxylates, thiol, thioether, urée, ammonium quaternaire, fluoroalkyl ou perfluoroalkyl. Des huiles polydiméthylsiloxane greffés ou séquencées comprenant au moins un bloc polyéther (avec par exemple des groupements polyéthylène glycol et/ou polypropylène glycol) peuvent également être employées.

Le composé b) est un composé liquide hydrocarboné : par exemple une polyoléfine tel qu'un copolymère ethylène\propylène et en particulier un polyisobutene de faible poids moléculaire (jusqu'à 5000 g/mol et de préférence entre 300 et 500 g/mol).

Le composé c) est un composé liquide organique choisi parmi les polydiènes, les polyesters, les polyisocyanates, les polyuréthanes, les polyépoxides, les fluoroalkyles, les fluoroethers, les huiles lubrifiantes (voir par exemple le brevet (FR-A-2 375 305), des plastifiants (par exemple des esters d'acide gras qui peuvent éventuellement être substitués par des hétéroatomes ou des des esters d'acide phosphorique ou des composés halohydrocarbonés). Les polyéthylènes glycols, les polypropylènes glycol ou l'huile de castor peuvent également être utilisés et ils amènent également des propriétés anti-coulures lors de l'application de la composition.

Les composés d) sont des paraffines liquides et des masses cireuses du type pétrolatum (JP-A-83/013 673).

Le composé e) est un polymère thermoplastique tel que du PVC.

Le composé f) est un copolymère chlorure de vinyle/acétate de vinyle (KOKAI JP-A-79/026 826),

Les composés g) sont des tensio-actifs cationiques, anioniques, non-ioniques, amphotères (JP-A-85/258 271).

(1) un ou des groupes hydrolysables liés à l'atome de silicium, et

(2) un ou des groupes organiques substitués par des radicaux comprenant un atome d'azote ou choisis dans le groupe des radicaux (méth)acrylate, époxy, et alcényle, et plus préférentiellement encore dans le groupe constitué par les composés suivants pris seul ou en mélange:

vinyltriméthoxysilane (VTMO),
3-glycidoxypropyl-triméthoxysilane (GLYMO),
méthacryloxypropyltriméthoxysilane (MEMO),
$[H_2N(CH_2)_3]Si(OCH_2CH_2CH_3)_3$,
$[H_2N(CH_2)_3]Si(OCH_3)_3$
$[H_2N(CH_2)_3]Si(OC_2H_5)_3$
$[H_2N(CH_2)_4]Si(OCH_3)_3$
$[H_2NCH_2CH(CH_3)CH_2CH_2]SiCH_3(OCH_3)_2$
$[H_2NCH_2]Si(OCH_3)_3$
$[n\text{-}C_4H_9\text{-}HN\text{-}CH_2]Si(OCH_3)_3$
$[H_2N(CH_2)_2NH(CH_2)_3]Si(OCH_3)_3$
$[H_2N(CH_2)_2NH(CH_2)_3]Si(OCH2CH_2OCH_3)_3$
$[CH_3NH(CH_2)_2NH(CH_2)_3]Si(OCH_3)_3$
$[H(NHCH_2CH_2)_2NH(CH_2)_3]\ Si(OCH_3)_3$

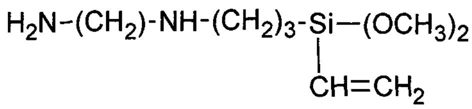

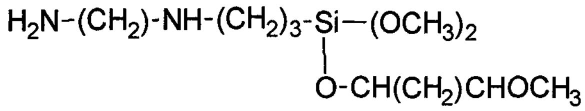

ou des oligomères polyorganosiloxaniques contenant de tels groupes organiques à une teneur supérieure à 20%.

Comme exemple de minérale siliceuse, organique et/ou non siliceuse **F'** on peut citer des produits très finement divisés dont le diamètre particulaire moyen est inférieur à 0,1 μm. Parmi ces charges figurent les silices de combustion et les silices de précipitation ; leur surface spécifique BET est généralement supérieure à 40 $m^2/g$. Ces charges peuvent également se présenter sous la forme de produits plus grossièrement divisés, de diamètre particulaire moyen supérieur à 0,1 μm. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre; leur surface spécifique est généralement inférieure à 30 $m^2/g$. Ces charges

peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes (brevets français FR-A-1 126 884, FR-A-1 136 885, FR-A-1 236 505, brevet anglais GB-A-1 024 234). Les charges traitées renferment, dans la plupart des cas, de 3 à 30 % de leur poids de composés organosiliciques. Les charges peuvent être constituées d'un mélange de plusieurs types de charges de granulométrie différente ; ainsi par exemple, elles peuvent être constituées de 30 à 70 % de silices finement divisées de surface spécifique BET supérieure à 40 $m^2$ /g et de 70 à 30 % de silices plus grossièrement divisées de surface spécifique inférieure à 30 $m^2$/g. L'introduction des charges a pour but de conférer de bonnes caractéristiques mécaniques et rhéologiques aux élastomères découlant du durcissement des compositions conformes à l'invention.

Les compositions selon l'invention peuvent en outre avantageusement comprendre au moins une résine silicone **(J')**. Ces résines silicones sont des polymères organopolysiloxanes ramifiés bien connus et disponibles dans le commerce. Elles présentent, par molécule, au moins deux motifs différents choisis parmi ceux de formule $R'''_3SiO_{1/2}$(motif M), $R'''_2SiO_{2/2}$ (motif D), $R'''SiO_{3/2}$ (motif T) et $SiO_{4/2}$ (motif Q) avec au moins un des motifs étant un motif T ou Q. Les radicaux R''' sont identiques ou différents et sont choisis parmi les radicaux alkyles linéaires ou ramifiés, les radicaux vinyle, phényle, trifluoro-3,3,3 propyle. De préférence, les radicaux alkyles présentent de 1 à 6 atomes de carbone inclus. Plus particulièrement, on peut citer comme exemples de radicaux R alkyles : les radicaux : méthyle, éthyle, isopropyle, tertiobutyle et n-hexyle. Ces résines sont de préférence hydroxylées et ont dans ce cas une teneur pondérale en groupe hydroxyle comprise entre 5 et 500 meq/100 g. Comme exemple de résines, on peut citer les résines MQ, les résines MDQ, les résines TD et les résines MDT.

La composition **Z** selon l'invention peut aussi comprendre un pigment, une base colorante ou un agent de coloration **H'.** Des exemples de pigments **H'** sont à titre indicatif: l'oxyde de fer rouge, l'oxyde de zinc, le noir de carbone, le graphite, l'oxyde de fer jaune, le blanc d'oxyde de titane, l'oxyde de chrome, l'oxyde de cobalt, , la litharge, l'outremer et le rouge et le jaune de molybdène, ou des pigments organiques connus et largement utilisés dans le domaine des peintures aquatiques. D'autres agents auxiliaires et additifs usuels (thixotropants, anti-coulures,...) peuvent être incorporés à la composition selon l'invention.

Outre les constituants principaux, la composition **Z** peut comprendre des polymères polyorganosiloxanes linéaires non réactifs **(G')** qui peuvent être introduits dans le dessein d'agir sur les caractéristiques physiques des compositions conformes à l'invention et/ou sur les propriétés mécaniques des élastomères issus du durcissement de ces compositions.

Ces polymères polyorganosiloxanes linéaires non réactifs **(G')** sont bien connus; ils comprennent plus spécialement: des polymères ($\alpha$,$\omega$-bis(triorganosiloxy)diorganopolysiloxanes de viscosités d'au moins 10 mPa.s à 25°C, formés essentiellement de motifs diorganosiloxy et d'au plus 1 % de motifs monoorganosiloxy et/ou siloxy, les radicaux organiques liés aux atomes de silicium étant choisis parmi les radicaux méthyle, vinyle et phényle, 60 % au moins de ces radicaux organiques étant des radicaux méthyle et 10 % au plus étant des radicaux vinyle. La viscosité de ces polymères peut atteindre plusieurs dizaines de millions de mPa.s à 25°C; ils comprennent donc des huiles d'aspect fluide à visqueux et des gommes molles à dures. Ils sont préparés selon les techniques usuelles décrites plus précisément dans les brevets français FR-A-978 058, FR-A-1 025 150, FR-A-1 108 764, FR-A-1 370 884. On utilise de préférence les huiles $\alpha$,$\omega$-bis(triméthylsiloxy) diméthylpolysiloxanes de viscosité allant de 10 mPa.s à 1 000 mPa.s à 25°C. Ces polymères qui jouent le rôle de plastifiants peuvent être introduits à raison d'au plus 70 parties en poids, de préférence de 5 à 20 parties en poids pour 100 parties en poids du composé organosilicié **A'**.

Des exemples de solvants **K'** sont par exemple : des dérivés hydrocarbonés aliphatique cycloaliphatique ou aromatiques tels que le white spirit, le cyclohexane, le toluene, l'octaméthyltrisiloxane, le xylène et les solvants ester tels que le méthoxypropylacétate, le n-butyl acétate et le 2-éthoxyéthylacetate, l'acétone, l'acétonitrile, ainsi que leurs mélanges. La quantité de solvant est déterminée suivant l'application ou le support à traiter de manière à obtenir une peinture de viscosité acceptable.

D'autres agents auxiliaires et additifs usuels peuvent être incorporés à la composition selon l'invention ; ceux-ci sont choisis en fonction des applications dans lesquelles sont utilisées lesdites compositions.

Les compositions selon l'invention peuvent être :

- mono-composantes ou RTV-1, c'est-à-dire conditionnées en un seul emballage hermétique à l'air, et stables au stockage en l'absence d'humidité, ou
- bi-composantes ou RTV-2, c'est-à-dire conditionnées en deux emballages et les composants de la composition sont séparés en deux fractions séparées, qui durcissent dès qu'elles sont réunies en présence d'humidité de l'air.

Des bases mono-composantes sont décrites en détail par exemple dans les brevets EP 141 685, EP 147 323, EP 102 268, EP 21 859, FR 2 121 289 et FR 2 121 631, cités en référence.

Des bases bi-composantes sont décrites en détail par exemple dans les brevets EP 118 325, EP 117 772, EP

10 478, EP 50 358, EP 184 966, US 3 801 572 et US 3 888 815, cités comme référence.

Une composition bi-composante RTV-2, précurseur de la composition **Z** selon l'invention, peut se présenter en deux emballages distincts **P1** étanche à l'air et **P2** caractérisé en ce que :

- l'emballage **P1** comprend :
- une quantité catalytiquement efficace d'au moins un catalyseur de polycondensation **M'** selon l'invention et tel que défini ci-dessus, et
- au moins un agent de réticulation **B'** et de préférence tel que défini ci-dessus, et
- l'emballage **P2** ne contient pas ledit catalyseur de polycondensation **M** et ledit agent de réticulation **B'** et comprend :
- pour 100 parties en poids d'au moins un composé organosilicié **A'** qui est de préférence un $\alpha,\omega$-bis(diméthylhydroxysilyl)-polydiméthylsiloxane dont la viscosité dynamique à 25°C est comprise entre 500 mPa.s et 100000 mPa.s et de préférence entre 1000 mPa.s et 10000 mPa., et
- de 0 à 10 partie(s) en poids d'eau.

Un des avantages de ces nouvelles compositions RTV-2 selon l'invention par rapport aux RTV-2 classiques de polycondensation utilisant des catalyseurs de dicarboxylate de dialkyl étain est qu'il n'est plus nécessaire d'ajouter de l'eau dans la partie **P2** car le catalyseur selon l'invention n'a pas besoin d'être activé simplifiant ainsi la formulation.

Tout matériau qui est utilisé dans un environnement aquatique et qui est sujet aux souillures, peut être un support **(1)** pour la présente invention. Des supports possibles sont les matériaux de construction des bateaux, tels que l'acier, l'aluminium, le bois, les fibres de verre imprégnées de résine et n'importe quel autre matériau composite. Les matériaux utilisés pour les canalisations, tels que le béton, les matières plastiques, l'acier, le fer et d'autres métaux, peuvent également être revêtus. Les bassins contenant de l'eau, y compris les piscines, sont sujets aux souillures. Les matériaux utilisés pour la fabrication des bassins sont identiques ou semblables à ceux utilisés pour la fabrication des canalisations.

Lorsque l'on met en oeuvre une couche antisalissure **(4)** (ou "top coat") selon l'invention on peut lui associer une couche **(3)** favorisant l'adhérence (ou "tie coat") de nature diverse et variée. Par exemple, elle peut être en polyuréthanne, en caoutchouc naturel ou synthétique éventuellement chloré, tels que le chloroprène et le néoprène, en caoutchouc butyral/silicone (KOKAI JP-A-78/137 231, JP-A-78/137 233 et JP-A-78/137 234). Suivant une autre approche, par exemple décrite dans le brevet US-5,449,553, un «tie coat » est décrit et est préparé à partir d'un composition durcissable à l'humidité de l'air comprenant un catalyseur de polycondensation à base d'étain, un réticulant tel que le silicate d'éthyle et un co-polymère issu du produit de réaction d'un organopolysiloxane à terminaison silylhydroxy avec un monomère polymérisable tels qu'un styrène ou une dioléfine conjuguée comme par exemple le 1,3-butadiène. Suivant un autre exemple décrit dans le brevet EP-1670866, un «tie coat» est formé à partir d'une composition comprenant :

(i) de 0 à 60 % en poids humide de pigments et de charges ; et
(ii) le complément étant une phase à base de liant comprenant :

- de 1 à 90 % en poids humide d'un ou de plusieurs polysiloxanes à fonction amine,
- de 1 à 90 % en poids humide d'un ou de plusieurs de polysiloxanes à fonction époxy, et
- de 0 à 20 % en poids humide d'un promoteur d'adhésion choisi dans le groupe constitué par les polysiloxanes à fonction hydroxyle, les polysiloxanes à fonction hydroxyalkyle et les polysiloxanes à fonction alcoxy en $C_1$-$C_4$.

L'invention concerne aussi un procédé d'application d'une couche antisalissure **(4)** sur un support **(1)** destiné à être utilisé dans des applications aquatiques comprenant les étapes suivantes :

a) sur ledit support **(1)** il est éventuellement déposé au moins une couche primaire **(2)** comprenant au moins un produit anticorrosif,
b) une couche **(3)** favorisant l'adhérence est déposée sur ladite couche primaire **(2)** ou sur ledit support **(1)** lorsque la couche primaire **(2)** est absente,
c) ladite couche **(3)** favorisant l'adhérence est durcie,
d) une couche antisalissure **(4)** est déposée sur ladite couche **(3)** favorisant l'adhérence, et
e) ladite couche antisalissure **(4)** est durcie au contact de l'humidité de l'air, et

- ledit procédé étant caractérisé en ce que la couche antisalissure **(4)** et éventuellement la couche **(3)** favorisant l'adhérence sont préparées à partir de la composition **Z** selon l'invention et telle que définie ci-dessus.

L'épaisseur des couches appliquées peut varier et des pellicules de 12 à 1000 microns d'épaisseur (sous condition d'un dépôt homogène) ont donné de bons résultats. L'épaisseur type des différentes couches est d'environ

50 μm pour le primaire, 150 μm pour le «tie coat » et 150 μm pour le «top coat ». Bien entendu, l'Homme de l'Art saura adapter l'épaisseur des différentes couches en fonction du résultat désiré.

Le dernier objet de l'invention concerne une utilisation de la composition **Z** selon l'invention et telle que définie ci-dessus pour former après durcissement au contact de l'humidité de l'air une couche antisalissure **(4)** sur un article afin de le protéger contre l'adhésion d'organismes aquatiques.

Ainsi, la composition **Z** selon l'invention peut être utilisée comme peinture dite « fouling-release coating », qui après durcissement grâce à l'humidité de l'air ou par ajoût d'eau confèrent à la surface du support traité des propriétés ultra-lissantes, avec de faibles forces de frictions et de faibles énergies de surface. Ce sont ces propriétés physiques qui empêchent les salissures d'adhérer.

D'autres avantages et caractéristiques de la présente invention apparaîtront à la lecture des exemples suivants donnés à titre illustratif nullement limitatif.

**EXEMPLES:**

**EXEMPLE 1 :** Préparation des complexes [Zn(β-dicétonate)$_2$(amine)$_n$]

Les complexes [Zn(β-dicétonate)$_2$ ] sont soit disponibles commercialement ou soit préparés selon les méthodes décrites dans la demande internationale WO-2009/106718.

Procédure générale pour la préparation des complexes [Zn(β-dicétonate)$_2$(amine)$_n$] : Un dicétonate de zinc est dilué ou dissout dans un solvant, alcane, éther ou aromatique, et l'amine est ajoutée pure ou diluée, stoéchiométriquement,en fonction du complexe souhaité. La complexation est légèrement exothermique. Le solvant est évaporé pour donner le complexe attendu.

Suivant les β-dicétonates, la nature des amines et les quantités d'amine ajoutées on obtient les complexes suivants :

- [Zn(R50)$_2$ (N,(n-propyl)éthylènediamine)],
- [Zn(R50)$_2$ (N,(n-propyl)éthylènediamine)$_2$],
- [Zn(R50)$_2$ (N,N-diméthyléthylènediamine)],
- [Zn(R50)$_2$ (N,N-diméthyléthylènediamine)$_2$],
- [Zn(R50)$_2$ (N,N'-diméthyléthylènediamine)],
- [Zn(R50)$_2$ (N,N'-diméthyléthylènediamine)$_2$],
- [Zn(R50)$_2$ (N,N,N'-triméthyléthylènediamine)],
- [Zn(R50)$_2$ (N,N,N'-triméthyléthylènediamine)$_2$],
- [Zn(R50)$_2$ (N,N'-diisopropyléthylènediamine)],
- [Zn(R50)$_2$ (N,N'-diisopropyléthylènediamine)$_2$],
- [Zn(R50)$_2$ (N,N-diéthyléthylènediamine)],
- [Zn(R50)$_2$ (N,N-diéthyléthylènediamine)$_2$],
- [Zn(R50)$_2$ (N-méthylbutylamine)],
- [Zn(R50)$_2$ (N-méthylbutylamine)$_2$],
- [Zn(R50)$_2$ (N-dibutylamine)],
- [Zn(R50)$_2$ (N-dibutylamine)$_2$],
- [Zn(R50)$_2$ (n-propylamine)],
- [Zn(R50)$_2$ (n-propylamine)$_2$],
- [Zn(R50)$_2$ (n-hexylamine)],
- [Zn(R50)$_2$ (n-hexylamine)$_2$],
- [Zn(R50)$_2$ (n-heptylamine)],
- [Zn(R50)$_2$ (n-heptylamine)$_2$],
- [Zn(R50)$_2$ (n-octylamine)],
- [Zn(R50)$_2$ (n-octylamine)$_2$],
- [Zn(R50)$_2$ (n-nonylamine)],
- [Zn(R50)$_2$ (n-nonylamine)$_2$],
- [Zn(R50)$_2$ (n-décylamine)],
- [Zn(R50)$_2$ (n-décylamine)$_2$],
- [Zn(R50)$_2$ (n-dodécylamine)],
- [Zn(R50)$_2$ (n-dodécylamine)$_2$],
- [Zn(R50)$_2$ (N,N-diméthyl-N-butylamine)],
- [Zn(R50)$_2$ (N,N-diméthyl-N-butylamine)$_2$],
- [Zn(R50)$_2$ (N-éthyl-N-butylamine)],

- [Zn(R50)$_2$ (N-éthyl-N-butylamine)$_2$],
- [Zn(R50)$_2$ (N,N- diisopropylamine)],
- [Zn(R50)$_2$ (N,N-diisopropylamine)$_2$],
- [Zn(R50)$_2$ (N,N-dipropylamine)],
- [Zn(R50)$_2$ (N,N-dipropylamine)$_2$],
- [Zn(TMOD)$_2$ (N-(n-propyl)éthylènediamine)],
- [Zn(TMOD)$_2$ (N-(n-propyl)éthylènediamine)$_2$],
- [Zn(TMOD)$_2$ (N,N-diméthyléthylènediamine)],
- [Zn(TMOD)$_2$ (N,N-diméthyléthylènediamine)$_2$],
- [Zn(TMOD)2 (N,N'-diméthyléthylènediamine)],
- [Zn(TMOD)$_2$ (N,N'-diméthyléthylènediamine)$_2$],
- [Zn(TMOD)$_2$ (N,N,N'-triméthyléthylènediamine)],
- [Zn(TMOD)$_2$ (N,N,N'-triméthyléthylènediamine)$_2$],
- [Zn(TMOD)$_2$ (N,N'-diisopropyléthylènediamine)],
- [Zn(TMOD)$_2$ (N,N'-diisopropyléthylènediamine)$_2$],
- [Zn(TMOD)$_2$ (N,N-diéthyléthylènediamine)],
- [Zn(TMOD)$_2$ (N,N-diéthyléthylènediamine)$_2$],
- [Zn(TMOD)$_2$ (N-méthylbutylamine)],
- [Zn(TMOD)$_2$ (N-méthylbutylamine)$_2$],
- [Zn(TMOD)$_2$ (N-dibutylamine)],
- [Zn(TMOD)$_2$ (N-dibutylamine)$_2$],
- [Zn(TMOD)$_2$ (n-propylamine)],
- [Zn(TMOD)$_2$ (n-propylamine)$_2$],
- [Zn(TMOD)$_2$ (n-hexylamine)],
- [Zn(TMOD)$_2$ (n-hexylamine)$_2$],
- [Zn(TMOD)$_2$ (n-heptylamine)],
- [Zn(TMOD)$_2$ (n-heptylamine)$_2$],
- [Zn(TMOD)$_2$ (n-octylamine)],
- [(Zn(TMOD)$_2$ n-octylamine)$_2$],
- [Zn(TMOD)$_2$ (n-nonylamine)],
- [Zn(TMOD)$_2$ (n-nonylamine)$_2$],
- [Zn(TMOD)$_2$ (n-décylamine)],
- [Zn(TMOD)$_2$ (n-décylamine)$_2$],
- [Zn(TMOD)$_2$ (n-dodécylamine)],
- [Zn(TMOD)$_2$ (n-dodécylamine)$_2$],
- [Zn(TMOD)$_2$ (N,N-diméthyl-N-butylamine)],
- [Zn(TMOD)$_2$ (N,N-diméthyl-N-butylamine)$_2$],
- [Zn(TMOD)$_2$ (N-éthyl-N-butylamine)],
- [Zn(TMOD)$_2$ (N-éthyl-N-butylamine)$_2$],
- [Zn(TMOD)$_2$ (N,N- diisopropylamine)],
- [Zn(TMOD)$_2$ (N,N- diisopropylamine)$_2$],
- [Zn(TMOD)$_2$ (N,N-dipropylamine)],
- [Zn(TMOD)$_2$ (N,N-dipropylamine)$_2$],
- [Zn(DPM)$_2$ (N-(n-propyl)éthylènediamine)],
- [Zn(DPM)$_2$ (N-(n-propyl)éthylènediamine)$_2$],
- [Zn(DPM)$_2$ (N,N-diméthyléthylènediamine)],
- [Zn(DPM)$_2$ (N,N-diméthyléthylènediamine)$_{2]}$,
- [Zn(DPM)$_2$ (N,N'-diméthyléthylènediamine)],
- [Zn(DPM)$_2$ (N,N'-diméthyléthylènediamine)$_2$],
- [Zn(DPM)$_2$ (N,N,N'-triméthyléthylènediamine)],
- [Zn(DPM)$_2$ (N,N,N'-triméthyléthylènediamine)$_2$],
- [Zn(DPM)$_2$ (N,N'-diisopropyléthylènediamine)],
- [Zn(DPM)$_2$ (N,N'-diisopropyléthylènediamine)$_2$],
- [Zn(DPM)$_2$ (N,N-diéthyléthylènediamine)],
- [Zn(DPM)$_2$ (N,N-diéthyléthylènediamine)$_2$],
- [Zn(DPM)$_2$ (N-méthylbutylamine)],
- [Zn(DPM)$_2$ (N-méthylbutylamine)$_2$],
- [Zn(DPM)$_2$ (N-dibutylamine)],

- $[Zn(DPM)_2$ (N-dibutylamine)$_2]$,
- $[Zn(DPM)_2$ (n-propylamine)],
- $[Zn(DPM)_2$ (n-propylamine)$_2]$,
- $[Zn(DPM)_2$ (n-hexylamine)],
- $[Zn(DPM)_2$ (n-hexylamine)$_2]$,
- $[Zn(DPM)_2$ (n-heptylamine)],
- $[Zn(DPM)_2$ (n-heptylamine)$_2]$,
- $[Zn(DPM)_2$ (n-octylamine)],
- $[Zn(DPM)_2$ (n-octylamine)$_2]$,
- $[Zn(DPM)_2$ (n-nonylamine)],
- $[Zn(DPM)_2$ (n-nonylamine)$_2]$,
- $[Zn(DPM)_2$ (n-décylamine)],
- $[Zn(DPM)_2$ (n-décylamine)$_2]$,
- $[Zn(DPM)_2$ (n-dodécylamine)],
- $[Zn(DPM)_2$ (n-dodécylamine)$_2]$,
- $[Zn(DPM)_2$ (N,N-diméthyl-N-butylamine)],
- $[Zn(DPM)_2$ (N,N-diméthyl-N-butylamine)$_2]$,
- $[Zn(DPM)_2$ (N-éthyl-N-butylamine)],
- $[Zn(DPM)_2$ (N-éthyl-N-butylamine)$_2]$,
- $[Zn(DPM)_2$ (N,N- diisopropylamine)],
- $[Zn(DPM)_2$ (N,N- diisopropylamine)$_2]$,
- $[Zn(DPM)_2$ (N,N-dipropylamine)],
- $[Zn(DPM)_2$ (N,N-dipropylamine)$_2]$,
- $[Zn(acac)_2$ (N,(n-propyl)éthylènediamine)],
- $[Zn(acac)_2$ (N,(n-propyl)éthylènediamine)$_2]$,
- $[Zn(acac)_2$ (N,N-diméthyléthylènediamine)],
- $[Zn(acac)_2$ (N,N-diméthyléthylènediamine)$_2]$,
- $[Zn(acac)_2$ (N,N'-diméthyléthylènediamine)],
- $[Zn(acac)_2$ (N,N'-diméthyléthylènediamine)$_2]$,
- $[Zn(acac)_2$ (N,N,N'-triméthyléthylènediamine)],
- $[Zn(acac)_2$ (N,N,N' -triméthyléthylènediamine)$_2]$,
- $[Zn(acac)_2$ (N,N'-diisopropyléthylènediamine)],
- $[Zn(acac)_2$ (N,N'-diisopropyléthylènediamine)$_2]$,
- $[Zn(acac)_2$ (N,N-diéthyléthylènediamine)],
- $[Zn(acac)_2$ (N,N-diéthyléthylènediamine)$_2]$,
- $[Zn(acac)_2$ (N-méthylbutylamine)],
- $[Zn(acac)_2$ (N-méthylbutylamine)$_2]$,
- $[Zn(acac)_2$ (N-dibutylamine)],
- $[Zn(acac)_2$ (N-dibutylamine)$_2]$,
- $[Zn(acac)_2$ (n-propylamine)],
- $[Zn(acac)_2$ (n-propylamine)$_2]$,
- $[Zn(acac)_2$ (n-hexylamine)],
- $[Zn(acac)_2$ (n-hexylamine)$_2]$,
- $[Zn(acac)_2$ (n-heptylamine)],
- $[Zn(acac)_2$ (n-heptylamine)$_2]$,
- $[Zn(acac)_2$ (n-octylamine)],
- $[Zn(acac)_2$ (n-octylamine)$_2]$,
- $[Zn(acac)_2$ (n-nonylamine)],
- $[Zn(acac)_2$ (n-nonylamine)$_2]$,
- $[Zn(acac)_2$ (n-décylamine)],
- $[Zn(acac)_2$ (n-décylamine)$_2]$,
- $[Zn(acac)_2$ (n-dodécylamine)],
- $[Zn(acac)_2$ (n-dodécylamine)$_2]$,
- $[Zn(acac)_2$ (N,N-diméthyl-N-butylamine)],
- $[Zn(acac)_2$ (N,N-diméthyl-N-butylamine)$_2]$,
- $[Zn(acac)_2$ (N-éthyl-N-butylamine)],
- $[Zn(acac)_2$ (N-éthyl-N-butylamine)$_2]$,
- $[Zn(acac)_2$ (N,N- diisopropylamine)],

- [Zn(acac)$_2$ (N,N- düsopropylamine)$_2$],
- [Zn(acac)$_2$ (N,N-dipropylamine)],
- [Zn(acac)$_2$ (N,N-dipropylamine)$_2$
- [Zn(UDD)$_2$ (N,(n-propyl)éthylènediamine)]
- [Zn(UDD)$_2$ (N,(n-propyl)éthylènediamine) $_2$]
- [Zn(UDD)$_2$ (N,N-diméthyléthylènediamine)],
- [Zn(UDD)$_2$ (N,N-diraéthyléthylènediamine)$_2$],
- [Zn(UDD)$_2$ (N,N'-diméthyléthylènediamine)],
- [Zn(UDD)$_2$ (N,N'-diméthyléthylènediamine)$_2$],
- [Zn(UDD)$_2$ (N,N,N'-triméthyléthylènediamine)],
- [Zn(UDD)$_2$ (N,N,N'-triméthyléthylènediamine)$_2$],
- [Zn(UDD)$_2$ (N,N'-diisopropyléthylènediamine)],
- [Zn(UDD)$_2$ (N,N'-diisopropyléthylènediamine)$_2$],
- [Zn(UDD)$_2$ (N,N-diéthyléthylènediamine)],
- [Zn(UDD)$_2$ (N,N-diéthyléthylènediamine)$_2$],
- [Zn(UDD)$_2$ (N-méthylbutylamine)],
- [Zn(UDD)$_2$ (N-méthylbutylamine)$_2$],
- [Zn(UDD)$_2$ (N-dibutylamine)],
- [Zn(UDD)$_2$ (N-dibutylamine)$_2$],
- [Zn(UDD)$_2$ (n-propylamine)],
- [Zn(UDD)$_2$ (n-propylamine)$_2$],
- [Zn(UDD)$_2$ (n-hexylamine)],
- [Zn(UDD)$_2$ (n-hexylamine)$_2$],
- [Zn(UDD)$_2$ (n-heptylamine)],
- [Zn(UDD)$_2$ (n-heptylamine)$_2$],
- [Zn(UDD)$_2$ (n-octylamine)],
- [Zn(UDD)$_2$ (n-octylamine)$_2$],
- [Zn(UDD)$_2$ (n-nonylamine)],
- [Zn(UDD)$_2$ (n-nonylamine)$_2$],
- [Zn(UDD)$_2$ (n-décylamine)],
- [Zn(UDD)$_2$ (n-décylamine)$_2$],
- [Zn(UDD)$_2$ (n-dodécylamine)],
- [Zn(UDD)$_2$ (n-dodécylamine)$_2$],
- [Zn(UDD)$_2$ (N,N-diméthyl-N-butylamine)],
- [Zn(UDD)$_2$ (N,N-diméthyl-N-butylamine)$_2$],
- [Zn(UDD)$_2$ (N-éthyl-N-butylamine)],
- [Zn(UDD)$_2$ (N-éthyl-N-butylamine)$_2$],
- [Zn(UDD)$_2$ (N,N- diisopropylamine)],
- [Zn(UDD)$_2$ (N,N- diisopropylamine)$_2$],
- [Zn(UDD)$_2$ (N,N-dipropylamine)],
- [Zn(UDD)$_2$ (N,N-dipropylamine)$_2$], et

• avec le ligand R50 qui est la β-dicétonate ou l'anion énolate du composé β-dicarbonylé suivant= P-dicétone stéaroylbenzoylméthane de formule (7') suivante :

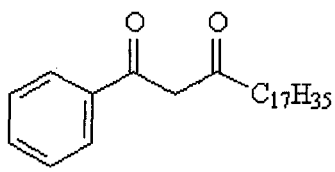

**(7')**

• avec le ligand acac qui est la β-dicétonate ou l'anion énolate du composé β-dicarbonylé suivant = pentanedione-2,4

• avec le ligand UDD qui est la β-dicétonate ou l'anion énolate du composé β-dicarbonylé suivant = undécanedione-2,4

- avec le ligand DPM qui est la β-dicétonate ou l'anion énolate du composé β-dicarbonylé suivant = 2,2,6,6-tétraméthyl-3,5-heptanedione,
- et avec le ligand TMOD qui est la β-dicétonate ou l'anion énolate du composé β-dicarbonylé suivant = 2,2,7-triméthyl-3,5-octanedione de formule (8') suivante :

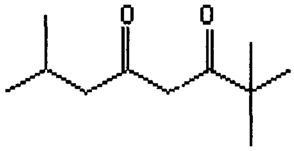

(8')

Exemple avec l'acétylacétonate de zinc hydrate : à une suspension dans 30ml d'éther diisopropylique de 9.89 g de $[Zn(acac)_2].H_2O$ à 23.14 % poids de Zn (35 mM) est ajouté 1.01 éq de dibutylamine (35.35 mM, 4.57g à 99%). Le milieu homogène est agité 1h puis évaporé pour donner 13.7 g du complexe $[Zn(acac)_2$(dibutylamine] sous forme d'une liquide peu visqueux.
RMN 1H (CDCl3) : 5.27 (2H, s), 2.61 (4H, t), 1.93 (12H, s), 1.47 (4H, quintuplet), 1.26 (4H, sextuplet), 0.87 (6H, t).

Exemple avec le benzoylstéaroylméthane (R50) :

- β-dicétone stéaroylbenzoylméthane de formule (7') suivante :

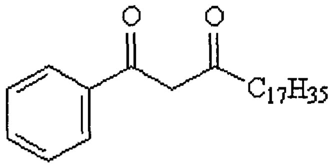

A une suspension de 98.1 g de benzoylstéaroylméthane (R50) dans 260 g de toluène est ajouté 54 g de solution de méthylate de sodium à 25% dans le méthanol à 20°C, pour donner un milieu homogène jaune pâle. Après 30 min est ajouté 34.8 g de solution de chlorure de zinc à 50% dans le méthanol, puis après 1h, 16.5 g de dibutylamine sont additionné à la suspension. Après 30 min, le chlorure de sodium est filtré et la solution est évaporée jusqu'à 60°C 2mbar pour donner 120.7 g du complexe attendu (rdt 100%), liquide jaune pâle qui cristallise avec le temps (Pf environ 40°C). Suivant qu'un ou deux équivalents d'amine est (sont) ajouté(s) on été préparé les complexes :

- $[Zn(R50)_2$ (N-dibutylamine)],
- $[Zn(R50)_2$ (N-dibutylamine)$_2$],

Toutes les structures ont été confirmées par analyse RMN $^1$H..

**Exemple 2. Application en système monocomposant RTV-1**

En RTV1, l'empâtage utilisé est préparé comme suit: à un mélange de 3464 g d'une huile α,ω-dihydroxylée de viscosité de 20000 centipoises et de 120 g de vinyltriméthoxysilane sous agitation est ajouté 16 g d'une solution de lithine à 2 % en poids dans le méthanol, puis après 5 minutes 400 g de silice de pyrogénation AE55 sont ajoutés. Le mélange est dévolatilisé sous vide puis stocké à l'abri de l'humidité.
Pour chaque test, le catalyseur testé est mélangé à 50 g de cet empâtage, puis le potentiel catalytique est évalué de 3 façons (voir les tableaux de résultats ci- après) :

- le temps de formation de peau (TFP), temps au bout duquel on observe une réticulation en surface, sur film de 2 mm,
- la persistance d'un toucher collant à 48h,
- la dureté (en Shore A) d'un cordon de 6 mm d'épaisseur dans de conditions régulées (23°C et 50% d'humidité relative) et sur des temps croissants (2, 3, 4,7 et 14 jours). La stabilité à haute température est aussi évaluée par

des mesures de dureté réalisées sur le cordon après 7 jours à température ambiante suivis de 7 jours à 100°C.

Nota : La dureté Shore est mesurée sur un cordon de 6 mm. Dans les tableaux de résultats, le symbole « > » correspond aux valeurs de dureté mesurées sur la partie supérieure du cordon et le symbole « < » correspond aux valeurs de dureté mesurées sur la partie inférieure du cordon moins exposée à l'air ambiant que la partie supérieure.

- Amines testées :
  - N,N'-diméthyléthylènediamine = DMED
  - N-(n-propyl)éthylènediamine = PrED
- Ligand TMOD = β-dicétonate ou l'anion énolate du composé β-dicarbonylé suivant = 2,2,7-triméthyl-3,5-octanedione de formule **(8')** suivante :

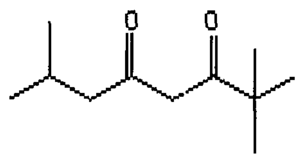

**(8')**

Tableau 1 :

| Essai | Catalyseur testé | quantité de catalyseur pour 50g d'empâtage | Temps de formation de peau (minutes) | Toucher collant après 48h | Dureté Shore A sur 6mm | |
|---|---|---|---|---|---|---|
| | | | | | **2J > <** | **4J > <** |
| 1 | [Zn(TMOD)$_2$] | 2,1 mM | 90 | **oui** | 7 9 | 18 20 |
| 2 | [Zn(TMOD)$_2$(DMED)] | 2,1 mM | 25 | **non** | 23 16 | 29 25 |
| 3 | [Zn(TMOD)$_2$(PrED)] | 2,1 mM | 45 | **non** | 19 15 | 28 22 |

Les catalyseurs selon l'invention présentent de meilleures duretés et ne présentent plus les problèmes liés au « touché collant » du catalyseur correspondant non aminé.

**EXEMPLE 3 : Composition bi-composant RTV-2 - réticulant polysilicate d'éthyle :**

- (a1) : huile polydiméthylsiloxane hydroxylée ayant une viscosité de 14000 mPa.s à 25°C et bloquée à chacune des extrémités de chaînes par un motif siloxyle $M^{OH}$ de formule suivante : $(CH_3)_2(OH)SiO_{1/2}$,
- (b1) : silice de pyrogénation ayant une surface spécifique BET de 200 $m^2/g$, traitée par de l'hexaméthyldisilazane (HMDZ), dispersée dans un mélange de l'huile polydiméthylsiloxane hydroxylée (a1) et d'une huile polydiméthylsiloxane bloquée à chacune des extrémités de chaînes par un motif siloxyle M de formule suivante $(CH_3)_3SiO_{1/2}$,
- (b2) : quartz broyé présentant un diamètre moyen de particules de 10 μm,
- (d1) : catalyseur testé,
- (e) : polysilicate d'éthyle

L'activité du catalyseur selon l'invention [Zn(TMOD)$_2$ (N,N-diméthyléthylènediamine)] est évalué par rapport au complexe de zinc correspondant mais non aminé [Zn(TMOD)$_2$]

- TMOD est la β-dicétonate ou l'anion énolate du composé β-dicarbonylé suivant = 2,2,7-triméthyl-3,5-octanedione de formule (8') suivante :

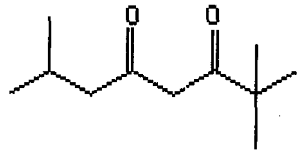

Pour cela, on prépare un empâtage à partir des constituants suivants :

- 20,4 g de l'huile $\alpha,\omega$-dihydroxylée (a1),
- 61,3 g d'une charge (b1), et
- 18,3 g d'une charge (b2),

auquel on ajoute 1,5 g de polysilicate d'éthyle (réticulant) pour 100g d'empâtage et x gramme (y mmol) du catalyseur à tester (d1).

Pour les catalyseurs au Zinc (selon l'invention ou pour le comparatif), les quantités testées sont ajoutées dans 1,5 ml du solvant méthyl-tertiobutyl-éther (MTBE).

Tableau 2 : Constituants des compositions testées RTV-2 (réticulant polysilicate d'éthyle).

| Ingrédients | Exemples selon l'invention (grammes) |
|---|---|
| (a1) | 20.4 |
| (b1) | 61.3 |
| (b2) | 18.3 |
| (e) | 1.5g pour 100 g |
| (d1) | 2,66 mmol pour 100 g d'empâtage |

En **RTV2,** les tests sont réalisés directement sur un mélange constitués des ingrédients (a1), (b1), (b2) et (e) auquel on ajoute et mélange le catalyseur à tester (d1). Le temps de travail ou "pot-life" est d'abord mesuré (temps au-delà duquel la viscosité du mélange empêche son utilisation c'est-à-dire le temps nécessaire à la formation d'un gel), puis à partir d'un autre mélange, un pion de 6 mm d'épaisseur est coulé et après durcissement on mesure les duretés Shore A (dessus et dessous) d'un pion démoulé d'épaisseur 6 mm dans des conditions régulées (23°C et 50% d'humidité relative) et sur des temps croissants.. Dans les tableaux de résultats le symbole « > » correspond aux valeurs de dureté mesurées sur la partie supérieure du pion et le symbole « < » correspond aux valeurs de dureté mesurées sur la partie inférieure du pion moins exposée à l'air ambiant que la partie supérieure. Mesure Dureté Shore A, notée DSA = mesures effectuées selon les indications de la norme ASTM-D2240). Le temps de travail ou "pot-life" est le temps au delà duquel la viscosité du mélange empêche son utilisation.

Tableau 3 : Tests RTV-2 - réticulant polysilicate d'éthyle

| **Essais** | **Catalyseurs testés (d1)** | **Temps de travail (mn)** | **Dureté Shore A sur 6mm** | | | |
|---|---|---|---|---|---|---|
| | | | **1 jour** | | **3jours** | |
| | | | > | < | > | < |
| 4 | $[Zn(TMOD)_2)]$ | 18 | 16* | 17 | 20* | 22 |
| 5 | $[Zn(TMOD)_2$ (N,N-diméthyléthylènediamine)] | 42 | 19 | 18 | 24 | 23 |

- Pour l'essai 1, le symbole « * » indique que le touché reste collant même après 3 jours.

**EXEMPLE 3 : Préparation d'une couche antisalissure « Top Coat » selon l'invention**

Formulation 1 : toutes les quantités sont exprimées en parties en poids.

- 80 parties Huile polydiméthylsiloxane $\alpha,\omega$-dihydroxylée de viscosité 3500 centipoises
- 10 parties Silicate d'éthyle
- 5 parties Huile méthylphénylpolysiloxane commercialisée par la société Bluestar Silicones sous le nom Rhodorsil

Huile 510V100®.

- 2 parties Huile méthylphénylpolysiloxane commercialisée par la société Bluestar Silicones sous le nom Rhodorsil Huile 550®
- 3 parties Silice Aerosil 200® commercialisée par 1a société Degussa
- 1 partie Huile de castor
- x parties du catalyseurs à tester
- 0,7 parties Pigment Bayferrox 130F® commercialisé par la société Bayer
- 0,1 parties Dispersant Disperbyk 140® commercialisé par la société Byk
- 20 parties Xylène

On revêt une plaque de métal en acier sablé et dégraissé avec une couche primaire époxy (préparée à partir du SigmaShield 610® commercialisé par la société Sigmakalon) d'une épaisseur de 50 μm environ. Après 72 heures de séchage à température ambiante on applique une couche favorisant l'adhérence "tie coat" (préparée à partir du SigmaGlide 790® commercialisé par la société Sigmakalon) d'une épaisseur de 150 microns environ. Après 48 heures de séchage à température ambiante, on applique une couche de 150 μm environ du « top coat » préparé selon la formulation 1 décrite ci-dessus.

Après un séchage de 48 heures à température ambiante, on plonge la plaque en milieu marin (dans de l'eau de mer) et on l'examine au bout de 12 et 23 semaines d'immersion.

Après lavage à grande eau, l'évaluation antifouling est de 100, ce qui indique l'absence complète d'organismes sur la plaque revêtue.

## Revendications

**1.** -Article présentant des propriétés antisalissures et destiné à être utilisé dans des applications aquatiques en particulier marines, comprenant :

a) un support **(1),**
b) au moins une couche favorisant l'adhérence **(3)** déposée sur ledit support **(1),** et
c) au moins une couche antisalissure **(4)** déposée sur ladite couche favorisant l'adhérence **(3),** ledit article étant **caractérisé en ce que** ladite couche antisalissure **(4)** est obtenue après dépôt et durcissement au contact de l'humidité de l'air d'une composition **Z** comprenant :

(i) au moins un composé organosilicié **A'** comprenant au moins deux groupements hydrolysables et condensables, identiques ou différent, ou au moins deux fonctions silanol ≡SiOH,
(ii) au moins un agent de réticulation **B',** et
(iii) une quantité catalytiquement efficace d'au moins un catalyseur de polycondensation **M** qui est un complexe de zinc comprenant dans sa structure un premier type de ligand qui est une β-dicétonate et un deuxième type de ligand qui est une amine.

**2. -** Article selon la revendication 1 comprenant :

a) un support **(1),**
b) au moins une couche primaire **(2)** déposée sur ledit support **(1)** comprenant au moins un produit anticorrosif,
c) au moins une couche **(3)** favorisant l'adhérence déposée sur ladite couche primaire **(2),** et
d) au moins une couche antisalissure **(4)** déposée sur ladite couche **(3)** favorisant l'adhérence, ledit article étant **caractérisé en ce que** ladite couche antisalissure **(4)** est obtenue après dépôt et durcissement au contact de l'humidité de l'air d'une composition **Z** comprenant :

(i) au moins un composé organosilicié **A'** comprenant au moins deux groupements hydrolysables et condensables, identiques ou différent, ou au moins deux fonctions silanol ≡SiOH,
(ii) au moins un agent de réticulation **B',** et
(iii) une quantité catalytiquement efficace d'au moins un catalyseur de polycondensation **M** qui est un complexe de zinc comprenant dans sa structure un premier type de ligand qui est une β-dicétonate et un deuxième type de ligand qui est une amine.

**3. -** Article selon l'une quelconques des revendications précédentes **caractérisé en ce que** la composition **Z** comprend :

(i) au moins un composé organosilicié **A'** comprenant au moins deux groupements hydrolysables et condensables, identiques ou différent, ou au moins deux fonctions silanol ≡SiOH,
(ii) au moins un agent de réticulation **B',** et
(iii) une quantité catalytiquement efficace d'au moins un catalyseur de polycondensation **M** qui est un complexe de formule **(1')** suivante :

$$[Zn\ (C^1)_n\ (C^2)_{n''}(L^1)_{y'}\ (L^2)_{y''}\ (X)_{x'}]_{z'}.\ (H_2O)_{x''} \qquad (1')$$

dans laquelle :

- les symboles $C^1$ et $C^2$ sont des ligands, identiques ou différents, choisis dans le groupe des β-dicétonates,
- les symboles n'et n" sont des nombres entiers égaux à 0, 1 ou 2 avec la condition que la somme n'+ n"=2,
- les symboles $L^1$ et $L^2$ sont des ligands, identiques ou différents, choisis dans le groupe des amines,
- les symboles y' et y" représentent le nombre de ligand amine et sont des nombres entiers égaux à 0, 1 ou 2 avec la condition que la somme y'+y"= 1 ou 2,
- le symbole X est un ligand différent de $C^1$, $C^2$, $L^1$ et $L^2$ et de préférence un ligand neutre autre qu'une amine et encore plus préférentiellement X est une molécule $H_20$,
- le symbole x'≥0, et de préférence x' = 0, 1, 2, 3 ou 4,
- le symbole x"≥0, et de préférence x"= 0, 1, 2, 3 ou 4, et
- le symbole z' est un nombre entier supérieur ou égal à 1, et de préférence z'=1 ou 2.

**4.** **-** Article selon l'une quelconques des revendications précédentes **caractérisé en ce que** le catalyseur de polycondensation **M** est un complexe de formule **(2')** suivante :

$$[Zn\ (C^1)_{n'}\ (C^2)_{n''}\ (L^1)_{y'}\ (L^2)_{y''}]_{z'} \qquad \mathbf{(2')}$$

dans laquelle :

- les symboles $C^1$ et $C^2$ sont des ligands, identiques ou différents, choisis dans le groupe des β-dicétonates,
- les symboles n' et n" représentent le nombre de ligand β-dicétonate et sont des nombres entier égal à 0, 1 ou 2 avec la condition que la somme n'+ n"=2,
- les symboles $L^1$ et $L^2$ sont des ligands, identiques ou différents, choisi dans le groupe des amines,
- les symboles y' et y" représentent le nombre de ligand amine et sont des nombres entiers égaux à 0, 1 ou 2 avec la condition que la somme y'+ y"= 1 ou 2, et
- le symbole z' est un nombre entier supérieur ou égal à 1, et de préférence z'=1 ou 2 et encore plus préférentiellement z'=1.

**5.** **-** Article selon l'une quelconques des revendications précédentes **caractérisé en ce que** le catalyseur de polycondensation **M** est un complexe de formule (3') suivante:

$$[(Zn\ (C^1)_2)_r(L^1)_y]_{z'} \qquad (3')$$

dans laquelle:

- le symbole C' est un ligand choisi dans le groupe des β-dicétonates,
- le symbole $L^1$ set un ligand choisi dans le groupe des amines,
- le symbole y' est un nombre égal à 1 ou 2
- le symbole r≥1 et de préférence r=1, 2, 3 ou 4, et
- le symbole z' est un nombre entier supérieur ou égal à 1, et de préférence le symbole z'=1, 2, 3 ou 4, et encore plus préférentiellement z'=1 ou 2.

**6.** - Article selon l'une quelconques des revendications 3, 4 ou 5 dans lequel les ligands de type amine $L^1$ et $L^2$ sont choisis parmi le groupe constitué par: les monoamines primaires de type alkylamine ayant au total de 1 à 40 atomes de carbone pour le radical alkyle, les monoamines secondaires de type dialkylamine ayant au total de 2 à 40 atomes de carbone pour les radicaux alkyles, les monoamines tertiaires de type trialkylamine ayant au total de 3 à 60 atomes de carbone pour les radicaux alkyles, les diamines alkylées ayant au total de 1 à 40 atomes de carbones pour les radicaux alkyles et les silanes aminés, et encore plus préférentiellement les ligands $L^1$ et $L^2$ sont choisis parmi le groupe constitué par les monoamines secondaires de type dialkylamine ayant au total de 2 à 20 atomes de carbone

et les monoamines primaires de type alkylamine ayant au total de 1 à 40 atomes de carbone pour le radical alkyle.

**7.** - Article selon l'une quelconques des revendications 3, 4 ou 5 dans lequel les ligands de type amine $L^1$ et $L^2$ sont choisis parmi le groupe constitué par les amines: n-butylamine, n-propylamine, n-heptylamine, n-octylamine, n-nonylamime, tert-butylamine, isopropylamine, 2-éthylhexylamine, décylamine, dodécylamine linéaires ou ramifiées, N-méthyl-N-butylamine, N,N-dipropylamine, N,N- diisopropylamine, N-éthyl-N-butylamine, N,N-dibutylamine, N,N-diméthyl-N-butylamine, di(n-octyl)amine, N-n-propyléthylènediamine, N,N'-diméthyléthylènediamine, N,N,N',N'-tétraméthyléthylènediamine, 3-aminopropyltriméthoxysilane et 3-aminopropylméthyldiéthoxysilane.

**8. -** Article selon l'une quelconques des revendications 3, 4 ou 5 dans lequel les ligands les ligands $C^1$, et lorsque le ligand $C^2$ est présent, sont des β-dicétonates ou des anions énolates d'un composé β-dicarbonylé de formule **(10')** suivante:

$R^1COCHR^2COR^3$ **(10')**

dans laquelle :

- $R^1$ et $R^3$, indépendemment l'un de l'autre, représentent un radical hydrocarboné en $C_1$ à $C_{30}$, un radical hydrocarboné en $C_6$ à $C_{30}$ comprenant un cycle aromatique ou un radical $-OR^4$ avec $R^4$ qui représente un radical hydrocarboné en $C_1$ à $C_{30}$,
- $R^2$ est un hydrogène ou un radical hydrocarboné en $C_1$ à $C_{30}$, , avec
- $R^1$ et $R^2$ peuvent être reliés par un radical, de préférence par un radical hydrocarboné en $C_3$ à $C_{30}$, pour former un cycle, et
- $R^2$ peut être relié à $R^1$ ou $R^3$ par un radical, de préférence par un radical hydrocarboné en $C_3$ à $C_{30}$, pour former un cycle.

**9.** - Article selon l'une quelconques des revendications précédentes **caractérisé en ce que** le catalyseur de polycondensation **M** est un complexe de formule **(3')** suivante:

$[(Zn\ (C^1)_2)_r(L^1)_{y'}]_{z'}$ **(3')**

dans laquelle:

- le symbole r≥1 et de préférence r=1, 2, 3 ou 4,
- le symbole z' est un nombre entier supérieur ou égal à 1, et de préférence le symbole z'=1, 2, 3 ou 4, et encore plus préférentiellement z'=1 ou 2,
- le symbole y' est un nombre égal à 1 ou 2
- le symbole $L^1$ est un ligand choisi dans le groupe constitué par les composés:

  • N,N-diméthyléthylènediamine, N,N'-diméthyléthylènediamine, N-(n-propyl)éthylènediamine, N,N,N'-triméthyléthylènediamine, N,N'-diisopropyléthylènediamine, N,N-diéthyléthylènediamine, N,N'-diéthyléthylènediamine, N,N,N',N'-tétraméthyléthylènediamine, N-méthylbutylamine, N-dibutylamine, n-propylamine, n-hexylamine, n-heptylamine, n-octylamine, n-nonylamine, n-décylamine, n-dodécylamine, tert-butylamine, isopropylamine, 2-éthylhexylamine, Bis(2-éthylhexyl)amine, diisononylamine, N,N-dipropylamine, N,N-dihexylamine, N,N-diheptylamine, N,N-dioctylamine N,N- diisopropylamine, N-éthyl-N-butylamine, N,N-diméthyl-N-butylamine, 3-aminopropyltriméthoxysilane et 3-aminopropylméthyldiéthoxysilane, et

- le symbole $C^1$ est choisi parmi le groupe constitué par les β-dicétonates ou les anions énolates des composés β-dicarbonylés suivants :

  • pentanedione-2,4 ; hexanedione-2,4; heptanedione-2,4; octanedione-2,4; nonanedione-2,4 ; décanedione-2,4 ; undécanedione-2,4 ; dodécanedione-2,4 ; heptanedione-3,5; l'éthyl-3-pentanedione-2,4; méthyl-5-hexanedione-2,4; octanedione-2,4; octanedione-3,5; diméthyl-5,5-hexanedione-2,4; méthyl-6-heptanedione-2,4; diméthyl-2,2-nonanedione-3,5; diméthyl-2,6 heptanedione-3,5; 2-acétylcyclohexanone (*Cy-acac*); 2,2,6,6-tétraméthyl-3,5-heptanedione (*t-Bu-acac*); 1,1,1,5,5,5-hexafluoro-2,4-pentanedione (*F-acac*)]; benzoylacétone; dibenzoylméthane; 3-méthyl-2,4-pentadione; 3-acétyl-pentane-2-one; 3-acétyl-2-hexanone; 3-acétyl-2-heptanone; 3-acétyl-5-méthyl-2-hexanone; stéaroylbenzoylméthane; 4-t-butyl-4'-méthoxy-dibenzoylméthane; 4,4'-diméthoxy-dibenzoylméthane, 4,4'-di-tert-butyl-dibenzoylméthane;

2,2,6,6-tétraméthyl-3,5-heptanedione, éthyle acétoacétate et isopropyle acétoacétate,

• une β-dicétone stéaroylbenzoylméthane ou 1-phényl-3-eicosanedione de formule (7) suivante :

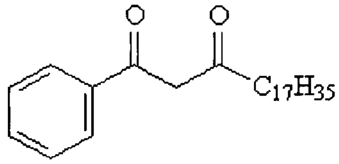

**(7')**

• une β-dicétone 2,2,7-triméthyl-3,5-octanedione de formule (8') suivante :

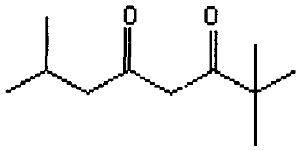

**(8')**

• et les esters de l'acide acétylacétique de formule (9') suivante :

$CH_3COCH_2COOR$ (9')

- avec R= méthyle, éthyle, n-propyle, isopropyle, n-butyle, sec-butyle, isobutyle, tertiobutyle, isopentyle, n-hexyle, n-octyle, méthyl-1 heptyle, n-nonyle, n-décyle et n-dodécyle,

**10. -** Article selon l'une quelconque des revendications 1 et 2 dans lequel le catalyseur de polycondensation **M** est susceptible d'être obtenu :

a) en faisant réagir pour 1 mole d'au moins un complexe de zinc de formule [Zn (β-dicétonate)$_2$] ou d'un mélange de deux complexes de zinc distincts de formule [Zn (β-dicétonate)$_2$] $\mathbf{X^1}$ mole d'amine ou d'un mélange d'amine, avec $\mathbf{X^1} \leq 2{,}5$ équivalents molaire par rapport au zinc, éventuellement en présence d'un solvant, de manière à obtenir un produit de réaction comprenant :

- x mole d'un complexe de zinc **A** qui est un complexe de formule [(Zn(β-dicétonate)$_2$)$_r$ (amine)]$_{z'}$
- y mole d'un complexe de zinc **B** qui est un complexe de formule [(Zn(β-dicétonate)$_2$ )$_r$ (amine)$_2$] $_{z'}$,
- avec x≥0, y≥0, le symbole r≥1 et de préférence r=1, 2, 3 ou 4, et le symbole z' est un nombre entier supérieur ou égal à 1, et de préférence z'=1, 2, 3 ou 4,
- éventuellement $\mathbf{X^3}$ mole du complexe [Zn (β-dicétonate)$_2$], et
- éventuellement $\mathbf{X^4}$ mole d'amine résiduelle n'ayant pas réagi, et

b) après élimination de l'amine résiduelle et éventuellement du solvant, on récupère le(s) catalyseur(s) de polycondensation **M** sous la forme d'au moins un complexe de zinc **A,** d'au moins un complexe de zinc **B** ou d'un mélange de complexe de zinc **A** et de complexe de zinc **B,** avec éventuelllement une quantité résiduelle de $\mathbf{X^3}$ mole du complexe [Zn (β-dicétonate)$_2$], et

- et les symboles $\mathbf{X^1}$**,** $\mathbf{X^3}$ et $\mathbf{X^4}$ sont des nombres et la somme x+y+ $\mathbf{X^3}$=1.

**11.** - Article selon la revendication 1 ou 2 dans lequel le composé organosilicié A' est un polyorganosiloxane comprenant :

(i) au moins deux motifs siloxyles de formule **(4')** suivante :

$$R^1_a Z_b SiO_{\left(\frac{4-(a+b)}{2}\right)}$$

**(4')**

dans laquelle :

- les symboles $R^1$, identiques ou différents, représentent des radicaux hydrocarbonés monovalents en $C_1$ à $C_{30}$,
- les symboles Z, identiques ou différents, représentent chacun un groupement hydrolysable et condensable ou un groupement hydroxy et de préférence sont choisis parmi le groupe constitué par les groupements de type: hydroxy, alcoxy, alcoxy-alkylène-oxy, amino, amido, acylamino, aminoxy, iminoxy, cétiminoxy, acyloxy, iminoxi, cétiminoxy et énoxy et encore plus préférentiellement Z est un groupement hydroxy,
- a est égal à 0, 1 ou 2, b est égal à 1, 2 ou 3, la somme a + b est égale à 1, 2 ou 3,

(ii) et éventuellement un ou plusieurs motif(s) siloxyle(s) de formule (5') suivante :

$$R_c SiO_{\left(\frac{4-c}{2}\right)}$$

**(5')**

dans laquelle:

- les symboles R, identiques ou différents, représentent des radicaux hydrocarbonés monovalent en $C_1$ à $C_{30}$ éventuellement substitués par un ou plusieurs atomes d'halogène ou par des groupements : amino, éther, ester, époxy, mercapto ou cyano, et
- le symbole c est égal à 0, 1, 2 ou 3.

**12.** - Article selon la revendication 1 ou 2 dans lequel l'agent de réticulation B' est un composé de silicium dont chaque molécule comprend au moins trois groupements hydrolysables et condensables Y et ledit agent de réticulation B' ayant la formule (7') suivante :

$$R'_{(4-a)}SiY_a \qquad (7')$$

formule dans laquelle :

- le symbole R' est un radical hydrocarboné monovalent comprenant de 1 à 30 atomes de carbone,
- le symbole Y est un groupement alcoxy, alcoxy-alkylène-oxy, amino, amido, acylamino, aminoxy, iminoxy, cétiminoxy, acyloxy et énoxy et de préférence Y est un groupement alcoxy, acyloxy, énoxy, cétiminoxy ou oxime,
- le symbole a = 3 ou 4.

**13.** - Article selon l'une quelconques des revendications précédentes **caractérisé en ce que** la composition Z comprend :

(i) au moins un composé organosilicié **A'** comprenant au moins deux groupements hydrolysables et condensables, identiques ou différent, ou au moins deux fonctions silanol ≡SiOH,
(ii) au moins un agent de réticulation **B',**
(iii) une quantité catalytiquement efficace d'au moins un catalyseur de polycondensation **M** qui est un complexe de zinc comprenant dans sa structure deux types de ligand : β-dicétonate et amine.
(iv) au moins un composé **L'** qui exsude à la surface de la couche antisalissure lorsque le réseau élastomère est formé améliorant ainsi l'effet "antisalissure",
(v) éventuellement au moins un promoteur d'adhérence **E',**
(vi) éventuellement au moins une charge minérale siliceuse, organique et/ou non siliceuse **F'**,
(vii) éventuellement au moins un pigment, une base colorante ou un agent de coloration **H',** et
(viii) éventuellement au moins un solvant **K'.**

**14.** **-** Procédé d'application d'une couche antisalissure **(4)** sur un support **(1)** destiné à être utilisé dans des applications aquatiques comprenant es étapes suivantes :

a) sur ledit support **(1)** il est éventuellement déposé au moins une couche primaire **(2)** comprenant au moins un produit anticorrosif,
b) une couche **(3)** favorisant l'adhérence est déposée sur ladite couche primaire **(2)** ou sur ledit support **(1)** lorsque la couche primaire **(2)** est absente,
c) ladite couche **(3)** favorisant l'adhérence est durcie,
d) une couche antisalissure **(4)** est déposée sur ladite couche **(3)** favorisant l'adhérence, et
e) ladite couche antisalissure **(4)** est durcie au contact de l'humidité de l'air,

- ledit procédé étant **caractérisé en ce que** la couche antisalissure **(4)** et éventuellement la couche **(3)** favorisant l'adhérence sont préparées à partir de la composition **Z** telle que définie selon l'une quelconque des revendications 1 à 13.

**15.** **-** Utilisation de la composition **Z** telle que définie selon l'une quelconque des revendications 1 à 13 pour former après durcissement au contact de l'humidité de l'air une couche antisalissure **(4)** sur un article afin de le protéger contre l'adhésion d'organismes aquatiques.

## Patentansprüche

**1.** Gegenstand mit Antifouling-Eigenschaften zur Verwendung bei aquatischen und insbesondere marinen Anwendungen, der Folgendes umfasst:

a) einen Träger **(1),**
b) mindestens eine haftungsfördernde Schicht **(3),** die auf dem Träger **(1)** abgeschieden ist, und
c) mindestens eine Antifouling-Schicht **(4),** die auf der haftungsfördernden Schicht **(3)** abgeschieden ist,

wobei der Gegenstand **dadurch gekennzeichnet ist, dass** die Antifouling-Schicht **(4)** nach Abscheidung einer Zusammensetzung **Z** und Härtung dieser Zusammensetzung bei Kontakt mit Luftfeuchtigkeit erhalten wird, wobei die Zusammensetzung **Z** Folgendes umfasst:

(i) mindestens eine Organosiliciumverbindung A' mit mindestens zwei gleichen oder verschiedenen hydrolysierbaren und kondensierbaren Gruppen oder mindestens zwei Silanolfunktionen ≡SiOH,
(ii) mindestens ein Vernetzungsmittel B' und
(iii) eine katalytisch wirksame Menge mindestens eines Polykondensationskatalysators M, bei dem es sich um einen Zinkkomplex handelt, der in seiner Struktur einen ersten Ligandentyp, bei dem es sich um ein β-Diketonat handelt, und einen zweiten Ligandentyp, bei dem es sich um ein Amin handelt, umfasst.

**2.** Artikel nach Anspruch 1, umfassend:

a) einen Träger **(1),**
b) mindestens eine Grundierungsschicht **(2),** die auf dem Träger **(1)** abgeschieden ist und mindestens ein Korrosionsschutzprodukt umfasst,
c) mindestens eine haftungsfördernde Schicht **(3),** die auf der Grundierungsschicht **(2)** abgeschieden ist, und
d) mindestens eine Antifouling-Schicht **(4),** die auf der haftungsfördernden Schicht **(3)** abgeschieden ist,

wobei der Gegenstand **dadurch gekennzeichnet ist, dass** die Antifouling-Schicht **(4)** nach Abscheidung einer Zusammensetzung Z und Härtung dieser Zusammensetzung bei Kontakt mit Luftfeuchtigkeit erhalten wird, wobei die Zusammensetzung **Z** Folgendes umfasst:

(i) mindestens eine Organosiliciumverbindung A' mit mindestens zwei gleichen oder verschiedenen hydrolysierbaren und kondensierbaren Gruppen oder mindestens zwei Silanolfunktionen ≡SiOH,
(ii) mindestens ein Vernetzungsmittel B' und
(iii) eine katalytisch wirksame Menge mindestens eines Polykondensationskatalysators M, bei dem es sich um einen Zinkkomplex handelt, der in seiner Struktur einen ersten Ligandentyp, bei dem es sich um ein β-Diketonat handelt, und einen zweiten Ligandentyp, bei dem es sich um ein Amin handelt, umfasst.

3. Gegenstand nach einem der vorhergehenden Ansprüche, **dadurch gekennzeichnet, dass** die Zusammensetzung Z Folgendes umfasst:

(i) mindestens eine Organosiliciumverbindung A' mit mindestens zwei gleichen oder verschiedenen hydrolysierbaren und kondensierbaren Gruppen oder mindestens zwei Silanolfunktionen ≡SiOH,
(ii) mindestens ein Vernetzungsmittel B' und
(iii) eine katalytisch wirksame Menge mindestens eines Polykondensationskatalysators M, bei dem es sich um einen Komplex der folgenden Formel (1') handelt:

$$[Zn\,(C^1)_{n'}\,(C^2)_{n''}\,(L^1)_{y'}\,(L^2)_{y''}\,(X)_{x'}]_{z'}.\,(H_2O)_{x''} \qquad (1')$$

wobei:

- die Symbole $C^1$ und $C^2$ für gleiche oder verschiedene Liganden aus der Gruppe der β-Diketonate stehen,
- die Symbole n' und n " für ganze Zahlen mit einem Wert von 0, 1 oder 2 stehen, mit der Maßgabe, dass die Summe n' + n'' = 2,
- die Symbole $L^1$ und $L^2$ für gleiche oder verschiedene Liganden aus der Gruppe der Amine stehen,
- die Symbole y' und y" für die Zahl der Amin-Liganden stehen und für ganze Zahlen mit einem Wert von 0, 1 oder 2 stehen, mit der Maßgabe, dass die Summe y' + y'' = 1 oder 2,
- das Symbol X für einen von $C^1$, $C^2$, $L^1$ und $L^2$ verschiedenen Liganden und vorzugsweise einen anderen neutralen Liganden als ein Amin und noch weiter bevorzugt für ein $H_2O$-Molekül steht,
- das Symbol x' ≥ 0 und vorzugsweise x' = 0, 1, 2, 3 oder 4,
- das Symbol x'' ≥ 0 und vorzugsweise x" = 0, 1, 2, 3 oder 4 und
- das Symbol z' für eine ganze Zahl größer gleich 1 steht und vorzugsweise z' = 1 oder 2.

4. Gegenstand nach einem der vorhergehenden Ansprüche, **dadurch gekennzeichnet, dass** es sich bei dem Polykondensationskatalysator M um einen Komplex der folgenden Formel (2') handelt:

$$[Zn\,(C^1)_{n'}\,(C^2)_{n''}\,(L_1)_{y'}\,(L^2)_{y''}]_{z'} \qquad (2')$$

wobei:

- die Symbole $C^1$ und $C^2$ für gleiche oder verschiedene Liganden aus der Gruppe der β-Diketonate stehen,
- die Symbole n' und n" für die Zahl der β-Diketonat-Liganden stehen und für ganze Zahlen mit einem Wert von 0, 1 oder 2 stehen, mit der Maßgabe, dass die Summe n' + n" = 2,
- die Symbole $L^1$ und $L^2$ für gleiche oder verschiedene Liganden aus der Gruppe der Amine stehen,
- die Symbole y' und y" für die Zahl der Amin-Liganden stehen und für ganze Zahlen mit einem Wert von 0, 1 oder 2 stehen, mit der Maßgabe, dass die Summe y' + y" = 1 oder 2, und
- das Symbol z' für eine ganze Zahl größer gleich 1 steht und vorzugsweise z' = 1 oder 2 und noch weiter bevorzugt z' = 1.

5. Gegenstand nach einem der vorhergehenden Ansprüche, **dadurch gekennzeichnet, dass** es sich bei dem Polykondensationskatalysator M um einen Komplex der folgenden Formel **(3')** handelt:

$$[(Zn\,(C^1)_2)_r\,(L^1)_{y'}]_{z'} \qquad \mathbf{(3')}$$

wobei:

- das Symbol $C^1$ für einen Liganden aus der Gruppe der β-Diketonate steht,
- das Symbol $L^1$ für einen Liganden aus der Gruppe der Amine steht,
- das Symbol y' für eine ganze Zahl mit einem Wert von 1 oder 2 steht,
- das Symbol r ≥ 1 und vorzugsweise r = 1, 2, 3 oder 4 und
- das Symbol z' für eine ganze Zahl größer gleich 1 steht und vorzugsweise das Symbol z' = 1, 2, 3 oder 4 und noch weiter bevorzugt z' = 1 oder 2.

6. Gegenstand nach einem der Ansprüche 3, 4 oder 5, wobei die Liganden vom Amin-Typ $L^1$ und $L^2$ aus der Gruppe bestehend aus primären Monoaminen vom Alkylamin-Typ mit insgesamt 1 bis 40 Kohlenstoffatomen für den Alkylrest, sekundären Monoaminen vom Dialkylamin-Typ mit insgesamt 2 bis 40 Kohlenstoffatomen für die Alkylreste,

tertiären Monoaminen vom Trialkylamin-Typ mit insgesamt 3 bis 60 Kohlenstoffatomen für die Alkylreste, Alkyldiaminen mit insgesamt 1 bis 40 Kohlenstoffatomen für die Alkylreste und Aminosilanen ausgewählt sind und noch weiter bevorzugt die Liganden $L^1$ und $L^2$ aus der Gruppe bestehend aus sekundären Monoaminen vom Dialkylamin-Typ mit insgesamt 2 bis 20 Kohlenstoffatomen und primären Monoaminen vom Alkylamin-Typ mit insgesamt 1 bis 40 Kohlenstoffatomen für den Alkyl rest ausgewählt sind.

**7.** Gegenstand nach einem der Ansprüche 3, 4 oder 5, wobei die Liganden vom Amin-Typ $L^1$ und $L^2$ aus der Gruppe bestehend aus den folgenden Aminen ausgewählt sind: n-Butylamin, n-Propylamin, n-Heptylamin, n-Octylamin, n-Nonylamin, tert-Butylamin, Isopropylamin, 2-Ethylhexylamin, Decylamin, Dodecylamin, die linear oder verzweigt sein können, N-Methyl-N-butylamin, N,N-Dipropylamin, N,N-Diisopropylamin, N-Ethyl-N-butylamin, N,N-Dibutylamin, N,N-Dimethyl-N-butylamin, Di(n-octyl)amin, N-n-Propylethylendiamin, N,N'-Dimethylethylendiamin, N,N,N',N'-Tetramethyl-ethylendiamin, 3-Aminopropyltrimethoxysilan und 3-Aminopropylmethyldiethoxysilan.

**8.** Gegenstand nach einem der Ansprüche 3, 4 oder 5, wobei es sich bei den Liganden $C^1$ und dann, wenn der Ligand $C^2$ vorliegt, um β-Diketonate oder Enolat-Anionen einer β-Dicarbonylverbindung der folgenden Formel (10') handelt:

$$R^1COCHR^2COR^3 \qquad (10')$$

wobei:

- $R^1$ und $R^3$ unabhängig voneinander für einen $C_1$-$C_{30}$-Kohlenwasserstoffrest, einen $C_6$-$C_{30}$-Kohlenwasserstoffrest mit einem aromatischen Ring oder einen Rest -$QR^4$ stehen, wobei $R^4$ für einen $C_1$-$C_{30}$-Kohlenwasserstoffrest steht,
- $R^2$ für Wasserstoff oder einen $C_1$-$C_{30}$-Kohlenwasserstoffrest steht, wobei
- $R^1$ und $R^2$ durch einen Rest, vorzugsweise einen $C_3$-$C_{30}$-Kohlenwasserstoffrest, zu einem Ring verbunden sein können und
- $R^2$ über einen Rest, vorzugsweise einen $C_3$-$C_{30}$-Kohlenwasserstoffrest, mit $R^1$ oder $R^3$ zu einem Ring verbunden sein kann.

**9.** Gegenstand nach einem der vorhergehenden Ansprüche, **dadurch gekennzeichnet, dass** es sich bei dem Polykondensationskatalysator M um einen Komplex der folgenden Formel **(3')** handelt:

$$[(Zn\ (C^1)_2)_r\ (L^1)_{y'}]_{z'} \qquad \textbf{(3')}$$

wobei:

- das Symbol $r \geq 1$ und vorzugsweise r = 1, 2, 3 oder 4,
- das Symbol z' für eine ganze Zahl größer gleich 1 steht und vorzugsweise das Symbol z' = 1, 2, 3 oder 4 und noch weiter bevorzugt z' = 1 oder 2,
- das Symbol y' für eine ganze Zahl mit einem Wert von 1 oder 2 steht,
- das Symbol $L^1$ für einen Liganden steht, der aus der Gruppe ausgewählt ist, die aus den folgenden Verbindungen besteht:

  • N,N-Dimethylethylendiamin, N,N'-Dimethyl-ethylendiamin, N-(n-Propyl)ethylendiamin, N,N,N'-Trimethylethylendiamin, N,N'-Diisopropylethylendiamin, N/N-Diethylethylendiamin, N,N'-Diethylethylendiamin, N,N,N',N'-Tetramethylethylendiamin, N-Methylbutylamin, N-Dibutylamin, n-Propylamin, n-Hexylamin, n-Heptylamin, n-Octylamin, n-Nonylamin, n-Decylamin, n-Dodecylamin, tert-Butylamin, Isopropylamin, 2-Ethylhexylamin, Bis(2-ethylhexyl)amin, Diisononylamin, N,N-Dipropylamin, N,N-Dihexylamin, N,N-Diheptylamin, N,N-Dioctylamin, N,N- Diisopropylamin, N-Ethyl-N-butylamin, N,N-Dimethyl-N-butylamin, 3-Aminopropyltrimethoxysilan und 3-Aminopropylmethyldiethoxysilan, und

- das Symbol $C^1$ aus der Gruppe bestehend aus den β-Diketonaten oder den Enolat-Anionen der folgenden β-Dicarbonylverbindungen ausgewählt ist:

  • 2,4-Pentandion; 2,4-Hexandion; 2,4-Heptandion; 2,4-Octandion; 2,4-Nonandion; 2,4-Decandion; 2,4-Undecandion; 2,4-Dodecandion; 3,5-Heptandion; 3-Ethyl-2,4-pentandion; 5-Methyl-2,4-hexandion; 2,4-Octandion; 3,5-Octandion; 5,5-Dimethyl-2,4-hexandion; 6-Methyl-2,4-heptandion; 2,2-Dimethyl-3,5-nonandion; 2,6-Dimethyl-3,5-heptandion; 2-Acetylcyclohexanon (*Cy-acac*) ; 2,2,6,6-Tetramethyl-3,5-heptandion (*t-Bu-acac);* 1,1,1,5,5,5-Hexafluor-2,4-pentandion (*F*-acac); Benzoylaceton; Dibenzoylmethan; 3-Methyl-2,4-pentadion; 3-Acetyl-2-pentanon; 3-Acetyl-2-hexanon; 3-Acetyl-2-heptanon; 3-Acetyl-5-methyl-2-hexanon; Stearoylbenzoylmethan; 4-t-Butyl-4'-methoxydibenzoylmethan; 4,4'-Dimethoxydibenzoylmethan, 4,4'-Di-tert-butyldibenzoylmethan; 2,2,6,6-Tetramethyl-3,5-heptandion, Acetessigsäureethylester und Acetessigsäureisopropylester,

* einem Stearoylbenzoylmethan- oder 1-phenyl-3-eicosandion-β-Diketon der folgenden Formel (7) :

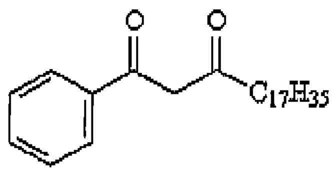

(7')

• einem 2, 2, 7-Trimethyl-3, 5-octandion-β-Diketon der folgenden Formel (8'):

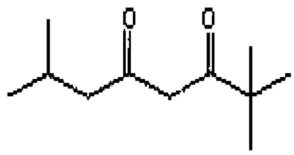

(8')

• und den Acetylessigsäureestern der folgenden Formel (9'):

$CH_3COCH_2COOR$ (9')

- mit R = Methyl, Ethyl, n-Propyl, Isopropyl, n-Butyl, sec-Butyl, Isobutyl, tert-Butyl, Isopentyl, n-Hexyl, n-Octyl, Methyl-1-heptyl, n-Nonyl, n-Decyl und n-Dodecyl.

**10.** Gegenstand nach einem der Ansprüche 1 und 2, wobei der Polykondensationskatalysator M erhältlich ist:

a) durch Umsetzung von $X^1$ mol Amin oder Amin-Mischung pro 1 mol mindestens eines Zinkkomplexes der Formel [Zn(β-Diketonat)$_2$] oder einer Mischung von zwei verschiedenen Zinkkomplexen der Formel [Zn(β-Diketonat)$_2$], wobei $X^1 \leq 2,5$ Moläquivalente, bezogen auf das Zink, gegebenenfalls in Gegenwart eines Lösungsmittels, zum Erhalt eines Reaktionsprodukts, umfassend:

- x mol eines Zinkkomplexes A, bei dem es sich um einen Komplex der Formel [(Zn(β-Diketonat)$_2$)$_r$(Amin)]$_{z'}$ handelt,
- y mol eines Zinkkomplexes β, bei dem es sich um einen Komplex der Formel [(Zn(β-Diketonat)$_2$)$_r$(Amin)$_2$]$_{z'}$ handelt,
- wobei $x \geq 0$, $y \geq 0$, das Symbol $r \geq 1$ und vorzugsweise r = 1, 2, 3 oder 4 und das Symbol z' für eine ganze Zahl größer gleich 1 steht und vorzugsweise z' = 1, 2, 3 oder 4,
- gegebenenfalls $\mathbf{X^3}$ mol des [Zn(β-Diketonat)$_2$]-Komplexes und
- gegebenenfalls $\mathbf{X^4}$ mol restliches nicht umgesetztes Amin, und

b) nach Entfernung des restlichen Amins und gegebenenfalls des Lösungsmittels Gewinnen des Polykondensationskatalysators bzw, der Polykondensationskatalysatoren **M** in Form von mindestens einem Zinkkomplex **A,** mindestens einem Zinkkomplex **B** oder einer Mischung von Zinkkomplex A und Zinkkomplex **B,** gegebenenfalls mit einer Restmenge von $\mathbf{X^3}$ mol des [Zn(β-Diketonat)$_2$]-Komplexes, und

- und die Symbole $\mathbf{X^1}$, $\mathbf{X^3}$ und $\mathbf{X^4}$ für Zahlen stehen und die Summe x + y + $\mathbf{X^3}$ = 1.

**11.** Gegenstand nach Anspruch 1 oder 2, wobei es sich bei der Organosiliciumverbindung **A'** um ein Polyorganosiloxan mit:

(i) mindestens zwei Siloxyleinheiten der folgenden Formel **(4'):**

$$R^1_a Z_b SiO_{\left(\frac{4-(a+b)}{2}\right)}$$

**(4')**

wobei:

- die Symbole $R^1$ gleich oder verschieden sind und für einwertige $C_1$- bis $C_{30}$-Kohlenwasserstoffreste stehen,
- die Symbole Z gleich oder verschieden sind und jeweils für eine hydrolysierbare und kondensierbare Gruppe oder eine Hydroxygruppe stehen und vorzugsweise aus der Gruppe bestehend aus Gruppen des Typs Hydroxy, Alkoxy, Alkoxy-alkylen-oxy, Amino, Amido, Acylamino, Aminoxy, Iminoxy, Ketiminoxy, Acyloxy, Iminoxy, Ketiminoxy und Enoxy ausgewählt sind und noch weiter bevorzugt Z für eine Hydroxygruppe steht,
- a gleich 0, 1 oder 2 ist, b gleich 1, 2 oder 3 ist, die Summe a + b gleich 1, 2 oder 3 ist,

(ii) und gegebenenfalls einer oder mehreren Siloxyleinheiten der folgenden Formel (5'):

$$R_c SiO_{\left(\frac{4-c}{2}\right)}$$

**(5')**

wobei:

- die Symbole R gleich oder verschieden sind und für einwertige $C_1$- bis $C_{30}$-Kohlenwasserstoffreste, die gegebenenfalls durch ein oder mehrere Halogenatome oder durch Amino-, Ether-, Ester-, Epoxid-, Mercapto- oder Cyanogruppen substituiert sind, stehen und
- das Symbol c gleich 0, 1, 2 oder 3 ist,

handelt.

**12.** Gegenstand nach Anspruch 1 oder 2, wobei es sich bei dem Vernetzungsmittel B' um eine Siliciumverbindung handelt, bei der jedes Molekül mindestens drei hydrolysierbare und kondensierbare Gruppen Y umfasst, wobei das Vernetzungsmittel **B'** die folgende Formel **(7')** aufweist:

$$R'_{(4-a)} SiY_a$$

**(7')**

in der:

- das Symbol R' für einen einwertigen Kohlenwasserstoffrest mit 1 bis 30 Kohlenstoffatomen steht,
- das Symbol Y für eine Alkoxy-, Alkoxy-alkylen-oxy-, Amino-, Amido-, Acylamino-, Aminoxy-, Iminoxy-, Ketiminoxy-, Acyloxy- und Enoxygruppe steht und Y vorzugsweise für eine Alkoxy-, Acyloxy-, Enoxy-, Ketiminoxy- oder Oximgruppe steht,
- das Symbol a = 3 oder 4.

**13.** Gegenstand nach einem der vorhergehenden Ansprüche, **dadurch gekennzeichnet, dass** die Zusammensetzung Z Folgendes umfasst:

(i) mindestens eine Organosiliciumverbindung **A'** mit mindestens zwei gleichen oder verschiedenen hydrolysierbaren und kondensierbaren Gruppen oder mindestens zwei Silanolfunktionen ≡SiOH,
(ii) mindestens ein Vernetzungsmittel **B',**
(iii) eine katalytisch wirksame Menge mindestens eines Polykondensationskatalysators **M,** bei dem es sich um einen Zinkkomplex handelt, der in seiner Struktur zwei Ligandentypen, nämlich β-Diketonat und Amin, umfasst,
(iv) mindestens eine Verbindung **L',** die bei der Bildung des Elastomernetzwerks an der Oberfläche der Antifouling-Schicht ausblutet, wodurch die "Antifouling"-Wirkung verbessert wird,
(v) gegebenenfalls mindestens einen Haftvermittler **E',**
(vi) gegebenenfalls mindestens einen silicium-haltigen, organischen und/oder nicht silicium-haltigen mineralischen Füllstoff **F',**
(vii) gegebenenfalls mindestens ein Pigment, eine Farbbasis oder ein Farbmittel **H'** und
(viii) gegebenenfalls mindestens ein Lösungsmittel **K'.**

**14.** Verfahren zum Aufbringen einer Antifouling-Schicht **(4)** auf einen Träger **(1)** zur Verwendung bei aquatischen Anwendungen, das die folgenden Schritte umfasst:

a) auf den Träger **(1)** wird gegebenenfalls mindestens eine Grundierungsschicht **(2),** die mindestens ein Korrosionsschutzprodukt umfasst, aufgebracht,
b) auf die Grundierungsschicht **(2)** bzw. bei Abwesenheit der Grundierungsschicht **(2)** auf den Träger **(1)** wird eine haftungsfördernde Schicht **(3)** aufgebracht,
c) die haftungsfördernde Schicht **(3)** wird gehärtet,
d) auf die haftungsfördernde Schicht **(3)** wird eine Antifouling-Schicht **(4)** aufgebracht, und
e) die Antifouling-Schicht **(4)** wird bei Kontakt mit Luftfeuchtigkeit gehärtet,

- wobei das Verfahren **dadurch gekennzeichnet ist, dass** die Antifouling-Schicht **(4)** und gegebenenfalls die haftungsfördernde Schicht **(3)** aus der Zusammensetzung Z gemäß einem der Ansprüche 1 bis 13 hergestellt werden.

**15.** Verwendung der Zusammensetzung Z gemäß einem der Ansprüche 1 bis 13 zur Bildung einer Antifouling-Schicht **(4)** auf einem Gegenstand nach Härtung bei Kontakt mit Luftfeuchtigkeit zum Schützen des Gegenstands vor dem Anhaften aquatischer Organismen.

**Claims**

**1.** Article with antifouling properties for use in aquatic applications, in particular marine applications, comprising:

a) a support **(1),**
b) at least one adhesion-promoting coat **(3)** deposited on said support **(1),** and
c) at least one antifouling coat **(4)** deposited on said adhesion-promoting coat **(3),** said article being **characterized in that** said antifouling coat **(4)** is obtained after deposition and curing on contact with atmospheric moisture of a composition **Z** comprising:

(i) at least one organosilicon compound **A'** comprising at least two identical or different hydrolyzable and condensable groups, or at least two silanol functions ≡SiOH,
(ii) at least one crosslinking agent **B',** and
(iii) a catalytically effective amount of at least one polycondensation catalyst **M** which is a zinc complex comprising in its structure a first type of ligand that is a β-diketanate and a second type of ligand that is an amine.

**2.** Article according to Claim 1, comprising:

a) a support **(1),**
b) at least one primer coat **(2)** deposited on said support **(1)** comprising at least one anticorrosion product,
c) at least one adhesion-promoting coat **(3)** deposited on said primer coat **(2),** and
d) at least one antifouling coat (4) deposited on said adhesion-promoting coat **(3),** said article being **characterized in that** said antifouling coat **(4)** is obtained after deposition and curing on contact with atmospheric moisture of a **composition Z** comprising:

(i) at least one organosilicon compound **A'** comprising at least two identical or different hydrolyzable and condensable groups, or at least two silanol functions ≡SiOH,
(ii) at least one crosslinking agent **B',** and
(iii) a catalytically effective amount of at least one polycondensation catalyst M which is a zinc complex comprising in its structure a first type of ligand that is a β-diketonate and a second type of ligand that is an amine.

3. Article according to either of the preceding claims, **characterized in that** composition **Z** comprises:

(i) at least one organosilicon compound **A'** comprising at least two identical or different hydrolyzable and condensable groups, or at least two silanol functions ≡SiOH,
(ii) at least one crosslinking agent **B'**, and
(iii) a catalytically effective amount of at least one polycondensation catalyst **M** which is a complex of formula **(1')** below:

$$[Zn\,(C^1)_{n'}\,(C^2)_{n''}\,(L^1)_{y'}\,(L^2)_{y''}\,(X)_{x'}]_{z'},\,(H_2O)_{x''} \qquad \mathbf{(1')}$$

in which:

- the symbols $C^1$ and $C^2$ are identical or different ligands chosen from the group of β-diketonates,
- the symbols n' and n" are integers equal to 0, 1 or 2 with the condition that the sum n'+ n"= 2,
- the symbols $L^1$ and $L^2$ arc identical or different ligands chosen from the group of amines,
- the symbols y' and y" represent the number of amine ligands and are integers equal to 0, 1 or 2 with the condition that the sum y'+ y"= 1 or 2,
- the symbol X is a ligand other than $C^1$, $C^2$, $L^1$ and $L^2$ and preferably a neutral ligand other than an amine and even more preferentially X is an $H_2O$ molecule,
- the symbol x'≥0, and preferably x' = 0, 1, 2, 3 or 4,
- the symbol x"≥0, and preferably x" = 0, 1, 2, 3 or 4, and
- the symbol z' is an integer greater than or equal to 1 and preferably z"=1 or 2.

4. Article according to any one of the preceding claims, **characterized in that** the polycondensation catalyst **M** is a complex of formula **(2')** below:

$$[Zn\,(C^1)_{n'}\,(C^2)_{n''}\,(L^1)_{y'}\,(L^2)_{y''}]_{z'} \qquad \mathbf{(2')}$$

in which:

- the symbols $C^1$ and $C^2$ are identical or different ligands chosen from the group of β-diketonates,
- the symbols n' and n" represent the number of β-diketonate ligands and arc integers equal to 0, 1 or 2 with the condition that the sum n'+ n"= 2,
- the symbols $L^1$ and $L^2$ are identical or different ligands chosen from the group of amines,
- the symbols y' and y" represent the number of amine ligands and are integers equal to 0, 1 or 2 with the condition that the sum y'+ y" = 1 or 2, and
- the symbol z' is an integer greater than or equal to 1 and preferably z'=1 or 2 and even more preferentially z'=I.

5. Article according to any one of the preceding claims, **characterized in that** the polycondensation catalyst M is a complex of formula (3') below:

$$[(Zn\,(C^1)_2)_r(L^1)_{y'}]_{z'} \qquad (3')$$

in which:

- the symbol $C^1$ is a Ligand chosen from the group of β-diketonates,
- the symbol $L^1$ is a ligand chosen from the group af amines,
- the symbol y' is a number equal to 1 or 2,
- the symbol r≥1 and preferably r = 1, 2, 3 or 4, and
- the symbol z' is an integer greater than or equal to 1 and preferably the symbol z'=1 2, 3 or 4,

and even more preferentially z'=1 or 2.

6. Article according to any one of Claims 3, 4 and 5, in which the ligands of amine type $L^1$ or $L^2$ arc chosen from the group consisting of primary monoamines of alkylamine type containing in total from I to 40 carbon atoms for the alkyl radical, secondary monoamines of dialkylamine type containing in total from 2 to 40 carbon atoms for the alkyl radicals, tertiary monoamines of trialkylamine type containing in total from 3 to 60 carbon atoms for the alkyl radicals, alkyl diamines containing in total from 1 to 40 carbon atoms for the alkyl radicals and amino silanes, and even more preferentially the ligands $L^1$ and $L^2$ are chosen from the group consisting of secondary monoamines of dialkylamine type containing in total from 2 to 20 carbon atoms and primary monoamines of alkylamine type containing in total from 1 to 40 carbon atoms for the alkyl radical.

7. Article according to any one of Claims 3, 4 and 5, in which the ligands of amine type $L^1$ and $L^2$ are chosen from the group consisting of the following amines: n-butylamine, n-propylamine, n-heptylamine, n-octylamine, n-nonylamine, tert-butylamine, isopropylamine, 2-ethylhexylamine, decylamine, dodecylamine, which may be linear or branched, N-methyl-N-butylamine, N,N-dipropylamine, N,N-diisopropylamine, N-ethyl-N-butylamine, N,N-dibutylamine, N,N"dimethyl-N-butylamine, di(n-octyl)amine, N-n-propylethylonediamine, N,N'-dimethylethylenediamine, N,N,N",N'-tetramethylethylenediamine, 3-aminopropyltrimethoxysilane and 3-aminopropylmethyldiethoxysilane.

8. Article according to any one of Claims 3, 4 and 5, in which the ligands $C^1$ and when the ligand $C^2$ is present are β-diketonates or enolate anions of a β-dicarbonyl compound of formula **(10')** below:

$$R^1COCHR^2COR^3 \qquad \textbf{(10')}$$

in which:

- $R^1$ and $R^3$, independently of each other, represent a $C_1$ to $C_{30}$ hydrocarbon-based radical, a $C_6$ to $C_{30}$ hydrocarbon-based radical comprising an aromatic ring or a radical $-OR^4$ with $R^4$ which represents a $C_1$ to $C_{30}$ hydrocarbon-based radical,
- $R^2$ is a hydrogen or a $C_1$ to $C_{30}$ hydrocarbon-based radical, with
- $R^1$ and $R^2$ may be linked via a radical, preferably via a $C_3$ to $C_{30}$ hydrocarbon-based radical to form a ring, and
- $R^2$ may be linked to $R^1$ or $R^3$ via a radical, preferably via a $C_3$ to $C_{30}$ hydrocarbon-based radical to form a ring.

9. Article according to any one of the preceding claims, **characterized in that** the polycondensation catalyst **M** is a complex of formula **(3')** below:

$$[(Zn\ (C^1)_2)_r(L^1)_{y'}]_{z'} \qquad \textbf{(3')}$$

in which:

- the symbol r≥1 and preferably r= 1, 2, 3 or 4,
- the symbol z' is an integer greater than or equal to 1 and preferably the symbol z'=1, 2, 3 or 4 and even more preferentially z'=1 or 2,
- the symbol y' is a number equal to 1 our 2,
- the symbol $L^1$ is a ligand chosen from the group consisting of the following compounds:

  • N,N-dimethylethylenediamine, N,N'-dimethylethylenediamine, N-(n-propyl)ethylenediamine, N,N,N'-trimethylethylenediamine, N,N'-diisopropylethylenediamine, N,N-diethylethylenediamine, N,N'-diethylethylenediamine, N,N,N',N'-tetramethylethylenediamine, N-methylbutylamine, N-dibutylamine, n-propylamine, n-hexylamine, n-heptylamine, n-octylamine, n-nonylamine, n-decylamine, n-dodecylamine, tert-butylamine, isopropylamine, 2-ethylhexylamine, bis(2-ethylhexyl)amine, diisononylamine, N,N-dipropylamine, N,N-dihexylamine, N,N-diheptylamine, N,N-dioctylamine, N,N-diisopropylamine, N-ethyl-N-butylamine, N,N-dimethyl-N-butylamine, 3-aminopropyltrimethoxysilane and 3-aminopropylmethyldiethoxysilane, and

- the symbol $C^1$ is chosen from the group consisting of the β-diketanates or the enolate anions of the following β-dicarbonyl compounds:

  • 2,4-pentanedione; 2,4-hexanediane; 2,4-heptanedione; 2,4-octanedione; 2,4-nonanedione; 2,4-decanedione; 2,4-undecanedione; 2,4-dodecanedione; 3,5-heptanedione; 3-ethyl-2,4-pentanedione; 5-methyl-2,4-hexanedione; 2,4-octanedione; 3.5-octanedione; 5,5-dimethyl-2,4-hexanedione; 6-methyl-2,4-heptanedione; 2,2-dimethyl-3,5-nonanedione; 2,6-dimethyl-3,5-heptanedione; 2-acetylcyclohexanone 2,2,6,6-tetramethyl-3,5-heptanedione (*t-Bu-acac*); 1,1,1,5,5,5-hexafluoro-2,4-pentanedione (*F-acac*); benzoylacetone; dibenzoylmethane; 3-methyl-2,4-pentadione; 3-acetyl-2-pentan-2-one; 3-acetyl-2-hexanone; 3-acetyl-2-heptanone; 3-acetyl-5-methyl-2-hexanone; stearoylbenzoylmethane; 4-t-butyl-4'-methoxydibenzoylmethane; 4,4'-dimethoxydibenzoylmethane, 4,4'-di-tert-butyldibenzoylmethane; 2,2,6,6-tetramethyl-3,5-heptanedione, ethyl acetoacetate and isopropyl acetoacetate,

• a β-diketone stearoylbenzoylmethane or 1-phenyl-3-cicosanedione of formula (7) below:

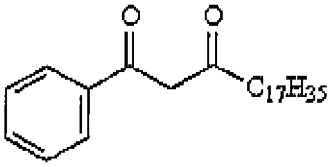

**(7')**

• a β-diketone 2,2,7-trimethyl-3,5-octanedione of formula (8') below;

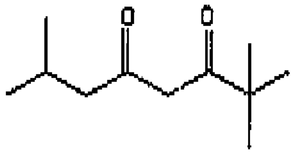

**(8')**

• and the acetylacetic acid esters of formula (9') below:

$CH_3COCH_2COOR$ (9')

- with R= methyl, ethyl, n-propyl, isopropyl, n-butyl, sec-butyl, isobutyl, tert-butyl, isopentyl, n-hoxyl, n-octyl, methyl-1 heptyl, n-nonyl, n-decyl and n-dodecyl,

**10.** Article according to either of Claims 1 and 2, in which the polycondensation catalyst M may be obtained:

a) by reacting per 1 mol of at least one zinc complex of formula [Zn β-diketanate)$_z$] or of a mixture of two different zinc complexes of formula [Zn (β-diketonate)$_2$] $X^1$ mol of amine or a mixture of amine with $X^1 \leq 2{,}5$ molar equivalents relative to the zinc, optionally in the presence of a solvent, so as to obtain a reaction product comprising:

- x mol of a zinc complex A which is a complex of formula [(Zn(β-diketonate)$_2$)$_r$ (amine)]z'
- y mol of a zinc complex B which is a complex of formula [(Zn(β-dikotonate)$_2$)$_r$ (amine)$_z$] $_{z'}$,
- with x≥0, y≥0, the symbol r≥1 and preferably r=1, 2, 3 or 4, and the symbol z' is an integer greater than or equal to 1, and preferably z'=I, 2, 3 or 4,
- optionally $X^3$ mol of the complex [Zn (β-diketonate)$_z$], and
- optionally $X^4$ mol of residual unreacted amine, and

b) after removal of the residual amine and optionally of the solvent, the polycondensation catalyst(s) M are recovered in the form of at least one zinc complex A, at least one zinc complex B or a mixture of zinc complex A and of zinc complex B, with optionally a residual amount of $X^3$ mol of the complex [Zn (β-diketonate)$_2$], and

- the symbols $X^1$, $X^3$ and $X^4$ are numbers and the sum $x+y+X^3=1$.

**11.** Article according to Claim 1 or 2, in which the organosilicon compound A' is a polyorganosiloxane comprising:

(i) at least two siloxyl units of formula (4') below:

$$R^1_a Z_b SiO_{\left(\frac{4-(a+b)}{2}\right)}$$

**(4')**

in which:

- the symbols $R^t$, which may be identical or different, represent $C_1$ to $C_{30}$ monovalent hydrocarbon-based radicals,
- the symbols Z, which may be identical or different, each represent a hydrolyzable and condensable group or a hydroxyl group and are preferably chosen from the group consisting of groups of the following types: hydroxyl, alkoxy, alkoxy-alkylene-oxy, amino, amido, acylamino, aminoxy, iminoxy, ketiminoxy, acyloxy, iminoxy, ketiminoxy and enoxy and even more preferentially Z is a hydroxyl group,
- a is equal to 0, 1 or 2, b is equal to 1, 2 or 3, the sum a + b is equal to 1, 2 or 3,

(ii) and optionally one or more siloxyl units of formula (5') below:

$$R_c SiO_{\left(\frac{4-c}{2}\right)}$$

**(5')**

in which:

- the symbols R, which may be identical or different, represent $C_1$ to $C_{30}$ monovalent hydrocarbon-based radicals optionally substituted with one or more halogen atoms or with amino, ether, ester, epoxy, mercapto or cyano groups, and
- the symbol c is equal to 0, 1, 2 or 3.

**12.** Article according to Claim 1 or 2, in which the crosslinking agent B' is a silicon compound, each molecule of which comprises at least three hydrolyzable and condensable groups Y and said crosslinking agent B' having formula (7') below:

$$R'_{(4-n)}SiY_n \qquad (7')$$

in which formula:

- the symbol R' is a monovalent hydrocarbon-based radical comprising from 1 to 30 carbon atoms,
- the symbol Y is an alkoxy, alkoxy-alkylene-oxy, amino, amido, acylamino, aminoxy, iminoxy, ketiminoxy, acyloxy or enoxy group and preferably Y is an alkoxy, acyloxy, enoxy, ketiminoxy or oxime group,
- the symbol a = 3 or 4.

**13.** Article according to any one of the preceding claims, **characterized in that** the composition Z comprises:

(i) at least one organosilicon compound A' comprising at least two identical or different hydrolyzable and condensable groups, or at least two silanol functions ≡SiOH,
(ii) at least one crosslinking agent B',
(iii) a catalytically effective amount of at least one polycondensation catalyst M which is a zinc complex comprising in its structure two types of ligand: β-diketonate and amine.
(iv) at least one compound L' which exudes at the surface of the antifouling coat when the elastomer network is formed, thus improving the "antifouling" effect,
(v) optionally at least one adhesion promoter **E',**
(vi) optionally at least one siliceous mineral, organic and/or non-siliceous filler **F',**

(vii) optionally at least one pigment, a coloring base or a coloring agent H', and
(viii) optionally at least one solvent **K',**

**14.** Process for applying an antifouling coat **(4)** to a support **(1)** intended to be used in aquatic applications, comprising the following steps:

a) at least one primer coat **(2)** comprising at least one anticorrosion product is optionally deposited on said support **(1),**
b) an adhesion-promoting coat **(3)** is deposited on said primer coat **(2)** or on said support **(1)** when the primer coat **(2)** is absent,
c) said adhesion-promoting coat **(3)** is cured,
d) an antifouling coat **(4)** is deposited on said adhesion-promoting coat **(3),** and
e) said antifouling coat **(4)** is cured on contact with atmospheric moisture,

- said process being **characterized in that** the antifouling coat **(4)** and optionally the adhesion-promoting coat **(3)** are prepared from the composition **Z** as defined according to any one of Claims 1 to 13.

**15.** Use of the composition Z as defined according to any one of Claims 1 to 13, for forming, after curing on contact with atmospheric moisture, an antifouling coat **(4)** on an article so as to protect it against the adhesion of aquatic organisms.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2266733 A
- FR 2557585 A
- EP 0051930 A
- GB 2118196 A
- EP 051930 A
- FR 2083029 A
- US 3702778 A
- US 07847401 B
- US 4025693 A
- FR 2375305 A
- JP 58013673 A
- JP 54026826 A
- JP 60258271 A
- FR 2557582 A
- FR 2786497 A
- EP 0885933 A
- US 5519104 A
- US 4515932 A
- US 4563498 A
- US 4528353 A
- WO 2009106718 A
- FR 1126411 A
- FR 1179969 A
- FR 1189216 A
- FR 1198749 A
- FR 1248826 A
- FR 1314649 A
- FR 1423477 A
- FR 1432799 A
- FR 2067636 A
- FR 1126884 A
- FR 1136885 A
- FR 1236505 A
- GB 1024234 A
- FR 978058 A
- FR 1025150 A
- FR 1108764 A
- FR 1370884 A
- EP 141685 A
- EP 147323 A
- EP 102268 A
- EP 21859 A
- FR 2121289
- FR 2121631
- EP 118325 A
- EP 117772 A
- EP 10478 A
- EP 50358 A
- EP 184966 A
- US 3801572 A
- US 3888815 A
- JP 53137231 A
- JP 53137233 A
- JP 53137234 A
- US 5449553 A
- EP 1670866 A


### Littérature non-brevet citée dans la description


- **WALTER NOLL.** Chemistry and Technology of Silicones. 1968, 395-398
- Les complexes monométalliques. **DIDIER ASTRUC.** Chimie Organométallique. EDP Sciences, 2000, 31